# EUROPEAN PATENT SPECIFICATION

(11) **EP 1 386 201 B1**
(45) Date of publication and mention of the grant of the patent: **02.01.2008**
(21) Application number: 01998003.6
(22) Date of filing: 14.11.2001
(51) Int. Cl.: G05B 19/418

(54) **A METHOD AND SYSTEM FOR LEADTIME REDUCTION IN THE PACKAGING INDUSTRY**
VERFAHREN UND SYSTEM ZUR VERZÖGERUNGSZEITREDUKTION IN DER PACKUNGSINDUSTRIE
PROCEDE ET SYSTEME PERMETTANT DE REDUIRE LE DELAI D'EXECUTION DANS L'INDUSTRIE DE L'EMBALLAGE

(30) Priority: 05.12.2000 US 251488 P
(43) Date of publication of application: 04.02.2004
(73) Proprietor: ExxonMobil Oil Corporation, Baytown, TX 77520-5200 (US)
(72) Inventor: ELLER, Robert, J., Webster, NY 14580 (US); CARDILLO, Joseph, J., Fairport, NY 14450 (US)
(74) Representative: Troch, Geneviève
(86) International application number: PCT/US2001/043901
(87) International publication number: WO 2002/061511

(56) References cited:
- WO-A-00/60523
- WO-A-98/08176
- WO-A-99/63452
- US-A- 5 231 567
- US-A- 5 559 708
- US-A- 5 657 453
- US-A- 6 036 345
- PATENT ABSTRACTS OF JAPAN vol. 1999, no. 03, 31 March 1999 (1999-03-31) & JP 10 320454 A (HITACHI LTD), 4 December 1998 (1998-12-04)

## Description

### BACKGROUND OF THE INVENTION

The present invention relates to a method and a system for reducing leadtime in the packaging industry. This invention is particularly beneficial to the flexible packaging industry which services the fast moving consumer goods manufacturing industry (i.e. producers of snacks, cookies, crackers, candies, health and beauty aids, etc.). Currently packaging is the longest leadtime item for these companies, and a system-wide bottleneck for them. Reducing the packaging leadtime allows for waste reduction and revenue enhancement opportunities.

The method disclosed herein comprises an embodiment of a business process which may be enabled by the internet and capable of exchanging information with other business processes.

U.S. Patent No. 6,067,406 discloses a method and device wherein the output mode of an output device for rendering electronic images on an output medium may be characterized by different user-selectable settings such as: paper type, ink type, etc. Apart from the screen characteristics such as screen ruling, frequency and angle, a calibration curve can be communicated via the page description language (e.g. PostScript Level 2) for each color component. Sets of calibration curves can be prepared for specific types of rendering, and be referenced by name. By this name indication and by naming conventions based upon the output mode or screening parameters, calibration changes can be introduced quickly and consistently.

U.S. Patent No. 5,991,783 discloses a system and method for generating, storing and transmitting a layout page containing graphical data correlated to at least one graphical image which has previously been graphically encoded, such that the layout page may be printed either as a complete, full-color image, or as individual color separation plates. The system and method create a set of master data files, having a main master file which stores complete RGB (red, green, blue) color data for the graphical image, and a correlated set of CMYK (cyan, magenta, yellow, black) master files, each containing graphical data for a single color separation plate for the graphical image. The main master file contains pointers to each of the CMYK master files. The system and method also create a set of preview data files: a set of CMYK preview files essentially only containing a pointer to the corresponding CMYK master file, and a main preview file essentially only containing a pointer to the main master file, and pointers to each of the CMYK preview files.

U.S. Patent No. 5,982,996 discloses an information distributing apparatus for operating within a computer network environment. The information distributing apparatus includes a computer having an operating system and is configured to operate within the computer network environment. The apparatus has an application configured for running on the computer via the operating system, the application configured to generate a source job in the form of an intermediate file format comprising an output instruction file. The apparatus includes a print processor in the form of an intermediate executable code for operating on the output instruction file. The apparatus also includes at least one output device having an output device driver configured to convert the output instruction file to output instructions usable by the output device for producing output. The print processor is operable on the output instruction file to select the device driver of one of the at least one output device to render the output instruction file, and feed the output instruction file to the output device driver of one of the at least one output device. A corresponding method is also disclosed.

U.S. Patent No. 5,960,164 also discloses a method and system for producing documents at a first site from database information produced at a second site remote from the first site has enhanced system flexibility and enhanced data handling throughput, which are accomplished by adopting standard programming interface or database tables to allow a computer at the second site to obtain information necessary to generate all necessary data codes and stream formatting information which will be utilized at the first site. An object association table, which associates document production jobs with specific documents and appropriate descriptions, is provided at the first site s) that it is accessible-e.g. through an online communications network-at the second site. The object association table is accessed at the second site in realizing substantially only file names in the object association table, to produce database information at the second site. The database information is supplied from the second site to the first site where it is translated so that it may be utilized by a specific print engine at the first site, utilizing a job formatting table to build an engine specific print stream for one or more print engines. Then the engine specific print stream, tailored to the particular print engine utilized, electronically controls a specific print engine at the first site to image documents having variable information from the database information supplied from the second site.

WO-A-99 643452 discloses a production system that allows a user to place an order, at a dedicated Internet site, for images and templates used for the design, assembly, production, and distribution of print advertising and/or commercial display material and create an assembled image of the final product on a computer screen using a predesigned formats and images stored on a server system. Upon approval by the user, the system can also transmit an electronic file to a production vendor or facility.

US 5 559 708 relates to a method for computer controlled flexible manufacturing of aluminium articles having patterns thereon wherein the pattern is digitized or otherwise reduced to computer-readable format and then printed onto the aluminium article under computer control.

WO-A-98 08176 discloses a proofing system utilizing dynamic PDF technology for the interface for templated printing wherein customized documents or other printed materials are provided before user data is entered so the user can better understand and visualize how the data will ultimately be placed in the final document.

Packaging is the longest leadtime ingredient for the consumer goods manufacturer. Most components that the manufacturer uses are commodities with leadtimes of hours or days. However, packaging is a custom product with leadtimes of 2-4 weeks for a repeat order and leadtimes of 8-12 weeks or more for a new design. This relatively long leadtime creates system-wide bottlenecks; inefficiencies and waste; packaging write-offs; barriers to lean manufacturing at end user sites; and 4 to 8 weeks of delay in launching new products. The long leadtime is the primary reason that successful promotions are not fully exploited.

The long leadtime for packaging is caused by complexity of the supply chain, the distance between the parties, and the process of manufacturing and delivering the packaging to the consumer goods manufacturer. A large leadtime reduction can be achieved by using the internet to collapse apparent distance between the parties and implementing a new business process using the internet. Accordingly, it is an object of the present invention to provide a method and system for reducing leadtime in the flexible packaging industry.

All patents and publications referred to in this application are hereby incorporated herein by reference in their entirety.

### SUMMARY OF THE INVENTION

The present invention relates to a method and system for linking the various members of the packaging (including labels) supply chain. The invention provides an integrated order placement, production planning, scheduling, and material requirements planning environment for the various members of the packaging supply chain. Among the members in the flexible packaging supply chain are end users, converters, and suppliers of goods and services necessary for the creation of packaging. The method and system of the present invention allow members of the supply chain to access the additional data they need to integrate their activities and reduce packaging leadtimes. In addition, the system is designed to interface with the converter's order management, inventory, and purchasing systems to acquire data for production planning (e.g. inventory levels), order processing, and certain other functions. The system is designed to interface with digital files containing package designs and images to provide information for item creation, production planning, and scheduling.

### DETAILED DESCRIPTON OF INVENTION

### General Overview

The present invention provides a method for reducing leadtime and waste in the packaging supply chain together with an integrated computerized platform for order placement, production planning, scheduling, and ensuring that the materials required to produce the ordered packages are available to support the schedule. The phrase "packaging" means containers for storing, shipping, and selling goods and products as well as labels for use in connection with such containers. In order to operate efficiently and economically, the method of the present invention comprises a computer system. Accordingly, the present invention comprises both the method and an enabling computer system.

In this application, Packaging Design means the graphic design (image) displayed on a package. Packaging Product Design means the combination of the Packaging Design with the structure of the package, which includes at least some of the materials used to make the package. Packaging Item means the combination of the Packaging Product Design (the design of a single package) combined with at least one of following categories of information: production configuration (multiple packages produced together), a specific bill of materials, and routing (the sequence of machines used to produce the item). A skeleton of the item may be created by the end user (end user item), and completed by the converter (converter item). Order means the combination of a packaging item with a specified delivery date and a specified quantity.

Compared to current methods for operating the packaging supply chain, the present invention comprises the following innovations which allow the invention to accomplish its objective of reducing leadtime and waste:

Complete Information - The first requirement for improving the performance of the packaging supply chain is to eliminate the errors caused by planning with incomplete information. Today, much information, especially information about the image, is generally unavailable to planners. The present invention has the capacity to make both the image itself, and critical scheduling information extracted from the image (scheduling metadata) available to planners at all levels in the supply chain.

Sales and Production Items - From the viewpoint of the supply chain, there are two equally important views of every packaging item. First, the item is a sales unit, a single package to be filled and sold. Simultaneously, the package is a production unit, for example, a sheet of cardboard with four cardboard boxes printed on it. Up to now, planning systems have emphasized the production unit, with the result planning across multiple suppliers (with often different sizes of equipment) is nearly impossible. The present invention solves this problem by introducing two items - an end user item corresponding to the sales unit, and a converter item (for each converter) corresponding to that converter's production unit.

Networked Environment - A typical packaging supply chain consists of six to ten widely separated companies, and chains with up to 50 members are not uncommon. By utilizing computer networks, and particularly by exploiting the ease and availability of the internet, the members of the supply chain can shrink the apparent distance between companies and greatly reduce distance related delays. The potential of a networked environment to speed up the supply chain depends on the quality of the information being communicated over the network (otherwise, the only effect of networking the supply chain is to speed up the rate at which mistakes are made). The present invention solves the problem of data quality by providing complete information and meaningful item definitions. It then goes on to introduce a suite of business processes that fully exploit the potential of a networked environment to slash leadtimes.

Reliable Leadtimes - An effective networked environment is an important leadtime reduction component. However, speed without reliability will not result in a breakthrough (if a process is sometimes fast and sometimes slow with no apparent reason for the difference, a prudent business will plan as if the process will be slow all of the time). The present invention introduces a set of integrated business methods and systems tools which maximize the likelihood that promised leadtimes will be met, thus allowing the supply chain to take advantage of the reduced leadtimes in all phases of its operation.

Schedule Optimization - Short, reliable leadtimes allow companies in the packaging supply chain to wait longer before committing to packaging decisions. The result of waiting longer is that there is less opportunity for circumstances to change or, equivalently, more schedule stability. In this environment, a powerful, easy to use scheduling tool coupled with the availability of complete information can greatly decrease waste in the supply chain. Accordingly, the present invention provides such a tool, together with the business methods required to enable its effective use.

### Networking The Packaging Environment

While there are many members involved in the packaging industry supply chain, the principal members of the supply chain are the end user, the converter, and suppliers of goods and services necessary for the production of packages. The end user uses the packages to store ship, promote, and/or sell its products. Generally, it is the end user that places orders for the creation and delivery of packaging. Generally, the converter is responsible for production of finished packaging ready to be filled or finished labels ready to be applied. The converter coordinates the printing of a package design selected by the end user onto a suitable substrate. The converter often actually performs the service of printing the package design and further processing the printed substrate to produce finished packaging materials for the end user. The third general category of members in the packaging supply chain are the suppliers of goods and services required by the converter to produce packaging. These suppliers supply materials such as plastic film from which the packages are made and services such as cylinder engraving.

The present invention provides a method and computer system for networking and integrating the packaging supply chain. The method and computer system of the present invention are particularly suitable for use in connection with the internet. The internet comprises a vast number of computers and computer networks that are interconnected through communication links. The interconnected computers exchange information using various services, such as electronic mail, Gopher, and the World Wide Web ("www"). The www service allows a server computer system (i.e., web server or web site) to send graphical web pages of information to a remote computer system. The remote computer system can then display the web pages. Each resource (e.g., computer or web page) of the www is uniquely identifiable by a Uniform Resource Locator ("URL"). To view a specific web page, a computer system specifies the URL for that web page in a request (e.g., a HyperText Transfer Protocol ("HTTP") request). The request is forwarded to the web server that supports that web page. When that web server receives the request, it sends that web page to the remote computer system. When the remote computer system receives that web page, it typically displays the Web page using a browser. A browser is a special-purpose application program that effects the requesting of web pages and the displaying of web pages. Web pages can be defined using Hyper Text Markup Language ("HTML") or Extended Markup Language ("XML"). HTML provides a standard set of tags that define how a web page is to be displayed. When a user indicates to the browser to display a web page, the browser sends a request to the server computer system to transfer to the client computer system an HTML document that defines the web page. When the requested HTML document is received by the client computer system, the browser displays the web page as defined by the HTML document. The HTML document contains various tags that control the displaying of text, graphics, controls, and other features. The HTML document may contain URLs of other web pages available on that server computer system or other server computer systems.

The system of the present invention allows the various members of the packaging supply chain to access the system though a system homepage appropriate to the member's position in the supply chain displayed on the monitor of the member's computer connected to the system of the present invention thorough the internet. Each member can log into the system through this homepage using a secure ID. The system of the present invention may also connect each member to the system through a communications link such as dedicated wide area network, a frame relay network, a local area network, or any other commercial networking technology. Each member having connection to the system of the present invention is capable of transmitting to and receiving data from the system useful to the member to fulfill its role in the packaging supply chain.

### The Method Of The Present Invention

The starting point for the method is a design which has been developed to the point of being a digital contract proof (e.g. a Portable Data Format file commonly referred to as a "PDF" file or other suitable file format) and an end user requirement for packaging carrying this design. From this starting point, the invention enables one or more of the following methods: distributed item creation, order placement, capacity planning and order acknowledgement, material requirements planning, procurement of raw materials and services, scheduling, order status tracking, and access control.

Distributed item creation comprises a method for accessing images, algorithms to calculate item data (e.g. percent ink coverage), and a collaborative item creation process using this data which comprises end user creation of the item skeleton (image and basic package structure) and converter addition of item details (bill of materials, plate/cylinder identification numbers, routings, etc.)

Capacity planning and order acknowledgement is a method for capacity planning (sales & operations planning, master production scheduling), capacity checking (slotting orders to production lines for available to promise ("ATP"), and allocation checks), and material availability checking.

Procurement of raw materials and services comprises a method for providing suppliers with immediate notification of urgent material/service requirements directly out of the material requirements planning process; and mechanisms for transferring requirements to purchasing systems, ordering materials/services from suppliers, and tracking the status of materials and services on order.

Scheduling comprises a method for scheduling converting operations (press, laminator, metallizers, coaters, slitters, etc.) using complete information; accessing image files and algorithms for extracting scheduling information from these files (e.g. process print degree of difficulty, degree of bounce associated with the color separated design, etc.); intuitive (drag and drop) scheduling methods for increased productivity; maintaining multiple "what if" scenarios; and scheduling methods that are designed for compatibility with the ATP/allocation process (i.e. methods to insure schedules can be developed to fulfill the commitments made in the ATP/allocation process).

Access control and security management methods comprise having a defined owner for each data element with the owner having the ability to grant access to other users (e.g. a converter can grant an end user access to the converters order status information); and security management that prevents access to information not owned or authorized for access by the inquiring party.

### The Computer System Of The Present Invention

The computer system for integrating the flexible packaging supply chain comprises a computer system accessible for networked interactive communications, which may include on-line communications using the internet, with users which comprises a first memory area for storing functionality and data for end user members of the supply chain; a second memory area for storing functionality and data for converter members of the supply chain; and a third memory area for storing functionality and data for other members of the supply chain (including but not limited to film suppliers, cylinder suppliers, ink suppliers, adhesive suppliers, etc.).

In one embodiment of the system, the computer system is programmed to perform the steps of (1) providing an end user with networked access to an end user homepage, with the homepage linking to the first memory area, and providing the end user with the ability to create an item, place orders for the item, receive confirmation of promise date, and track order status; (2) providing a converter with networked access to a converter homepage, with the homepage linking to the second memory area; and providing the converter with the ability to receive orders, add item details, plan production, check "available to promise" against these plans, schedule orders for production, plan material requirements, initiate orders for material, track production, and insure production meets promised delivery dates; and (3) providing other users with networked access to other user homepage(s), with the homepage(s) linking to a third memory area, and providing the ability to send and receive information concerning orders, forecasts, schedules, etc. as required to synchronize and integrate the supply chain.

In another embodiment of the system, the computer system is further programmed to support distributed item creation in a collaborative planning environment comprising: (1) tools for collaborative item creation (facilities for creating and storing elements of item information- for example structure, material descriptions, multilevel bills of materials (e.g. structure, ink, routings, etc.); (2) tools to access images and extract metadata (information extracted from the digital image which is essential to prepare production plans and schedules e.g. difficulty of print; specific colors used to print image; percent coverage by color; etc.) and (3) a collaborative item creation process using these tools: end user creation of the item skeleton (image and basic package structure); converter addition of item details (bills of materials, plate/cylinder identification numbers, routings, etc.).

In another embodiment of the system, the computer system is further programmed to support electronic placement of orders by the end user and electronic confirmation of the original date and quantity (or proposal of a new date and quantity) by the converter.

In another embodiment of the system of the present invention, the computer system is further programmed to support capacity planning and order acknowledgement in a collaborative planning environment comprising: (1) capacity planning tools (sales & operations planning, master production scheduling), capacity checking tools (available to promise, allocation), and material availability checking tools; (2) a capacity planning & management process enabled by these tools; (3) an acknowledgement process enabled by these tools; (4) mechanisms for capturing inventory and order status; (5) mechanisms for slotting orders to production lines; and (6) mechanisms for dynamically reallocating material among jobs.

In one embodiment of the system, the computer system is further programmed to support material requirements planning in a collaborative planning environment.

In another embodiment of the system, the computer system is further programmed to support procurement of materials and services in a collaborative planning environment comprising: tools for providing suppliers with immediate notification of urgent material/service requirements directly out of the material requirements planning process; and mechanisms for transferring requirements to purchase systems, ordering materials/services from suppliers, and tracking the status of materials and services on order.

In another embodiment of the system, the computer system is further programmed to support line scheduling enhanced by the availability of image information in a collaborative planning environment comprising: (1) scheduling tools for converting operations (printing, laminating, metallizing, coating, slitting, etc.); (2) access to image files and algorithms utilizing scheduling information extracted from these files (e.g. process print degree of difficulty, degree of bounce associated with the color separated design, etc.); (3) intuitive (drag and drop) scheduling based on complete information; (4) ability to maintain multiple "what if" scenarios; (5) a scheduling process enabled by these tools; and (6) scheduling process and tools are designed for compatibility with ATP/allocation processes (i.e. these processes and tools ensure that schedules can be developed to fulfill the commitments made in ATP/allocation).

In another embodiment of the system, the computer system comprises order status tracking (an internet site providing the capability to track the status of packaging orders).

In another embodiment of the system, the computer system comprises access control and security management comprising: defined owner for each data element with the owner having the ability to grant access to other users (e.g. a converter can grant an end user access to the converters order status information); and security management that prevents access to information not owned or authorized for access by the inquiring party.

In another embodiment of the system, the computer system comprises output compatibility (a system designed to interface with all known digital output technologies - monitors, cylinder/plate engravers, ink jet printers, toner fusion printers, thermal printers, etc.).

### lmage Metadata

Production planning and scheduling systems depend on complete information about the jobs being scheduled in order to prepare high quality plans and schedules. In the case of packaging, much of this information is related to the demands that the graphics on the package will place on the printing operation. Today, in virtually all cases, this information is not readily available to the production planner or scheduler. As a result, production plans and schedules are often flawed, sometimes to the point of being completely unusable.

The missing information is data about the image (graphic design). Generically, data about an image is called "metadata". In order for packaging production planning and scheduling systems to operate with peak efficiency and effectiveness, a new class of metadata must be created: metadata for item creation, production planning, and scheduling. The present invention satisfies this requirement by defining specific metadata elements, providing algorithms to extract these elements from an image, and incorporating the use of these elements into its enabling computer system. This section describes the individual elements of metadata identified and the algorithms for extracting each element. The more metadata elements created and utilized, the more effective the method and system of the present invention will be. However, it is understood that one or any combination of the individual metadata elements may be useful in the present invention.
1. Printing Colors - Description. Once a digital contract proof (PDF file or other suitable format) has been approved, the next step is to color separate this file. The result of this step is to create one color separated file (monochrome TIFF or other suitable format) for each color to be printed on the press. This algorithm retrieves the colors used to print the job and stores them (together with the RGB values required to display them on a monitor) in the metadata file.
   Printing Colors - Algorithm. For each color separated file, retrieve and store the color name (e.g. Kinder Orange) or color number (e.g. Pantone color number) of the ink to be used in the associated press station in the metadata file. Look up and store the corresponding RGB value (three byte representation of the color as displayed on a monitor) in the metadata file. If the sequence in which these colors will be printed on the press is known, store this information in press station sequence (i.e. Station 1 Color Name or Color Number, Station 1 RGB Value, Station 2 Color Name or Color Number, Station 2 RGB Value, etc.).
2. Ink Coverage - Description. The amount of ink used to print an image can be calculated from the ink's coating weight and the percent of the image which will be covered by the ink. This algorithm calculates the percent ink coverage for each color and stores the result in the metadata file.
   Ink Coverage - Algorithm. For each color separated file, calculate percent coverage as follows:
   Image Coverage = Sum of the grayscale values for each byte in the image
   Total Coverage = Number of bytes in the image * Max grayscale value
   Percent Coverage = (Image Coverage / Total Coverage) * 100
   and store the resulting percentages in the metadata file in the same order as the color names.
   If dot gain emulation software is available, the accuracy of this estimate can be improved by preprocessing the image to emulate dot gain on the target press before calculating Percent Coverage using the algorithm shown above.
3. Process Difficulty - Description. Packages contain a variety of image types. Simple line art (solid color images) can be printed by even the oldest, most poorly maintained presses. High quality photorealistic images, on the other hand, are printed using 4-color process and require high quality, well maintained machines to render an acceptable image. Vignettes (images that fade continuously from highly saturated color to white) are the most difficult images to print using conventional printing techniques since a continuous reduction in dot size is the most demanding test of press capability. This algorithm examines an image file to determine the degree of process difficulty associated with the printing the image.
   Process Difficulty - Algorithm. Analyze the CMYK image file (PDF or other suitable format) as follows:
   If 100% of image has only black bytes (line art) or consists of vector art at constant grayscale, then process difficulty equals "1".
   If 100% of image has only one byte (line art) or two bytes (duotone) "on", but some of the image has two bytes on, then process difficulty equals "2".
   If some of the image has three bytes (3-color process) or four bytes (4-color process) "on", then process difficulty equals "3".
   If 5% or more of the image is a monotone decreasing grayscale from some positive value to zero (vignette), then process difficulty equals "4".
   Finally, store the maximum resulting process difficulty level (1, 2, 3, or 4) in the metadata file.
4. Bounce - Description. When a color separated image is rendered as a flexographic or letterpress plate, the plate will consist of raised areas where there is printing and blank areas where no printing exists. During the printing process, the raised areas support the plate against the impression cylinder. If a blank area extends across the entire width of the plate, the plate will droop toward the cylinder, and will tend to bounce when the next raised area comes into contact with cylinder as the plate continues its revolution. Presses differ considerably in their ability to maintain print quality when printing such an image. This algorithm examines the image for the existence of blank areas across the entire image. The resulting measure can than be correlated with the capabilities of individual presses to insure that jobs are scheduled on lines that are capable of maintaining print quality when printing the image.
   Bounce - Algorithm. For each color separated file, calculate void area as follows:
   Retrieve the Minimum Void Width (Vₘ) corresponding to the target press. (In the absence of a press specific Vₘ, use the default Vₘ value).
   Beginning at the start of the file, extract a full width subset of the file Vₘ units high. Sum of the grayscale values for each byte in the subset.
   If the sum of the grayscale values = 0 (or is < a press specific threshold value), then write the position of the first byte in the subset to the metadata file.
   Index down one line, and repeat the process until the full width subset contains the last byte of the file. When the last byte first appears in the subset, process this subset and stop.
   The metadata file now contains the start position of each segment of the file that has the potential to cause a bounce problem. Further process this file to combine overlapping void areas into a set of discrete voided bars. The height of the largest void bar is then compared to an empirically derived table which links maximum void height (Hᵥₘₐₓ) to image quality when printed on the target press. If the image is printed more than one across the plate, the preceding algorithm is applied to the fully stepped and repeated image. Alternatively, the positions of the voided areas can be passed to an optimization algorithm which offsets the images in such a way as to minimize Hᵥₘₐₓ for the stepped and repeated image. The resultant Hᵥₘₐₓ can then be taken from the optimizing algorithm. Store Hᵥₘₐₓ in the metadata file.
5. Image Dimension - Description. Packages are often printed in multiples of the finished package (e.g. four boxes printed on a single sheet of cardboard stock, which is subsequently cut and folded to make four individual boxes). In order to choose the most efficient press for printing a package (or label), the dimensions of the image are required.

Image Dimensions - Algorithm. Retrieve image width and image length (cutoff) from the image file. Store these values in the metadata file. If the converter has slotted the item to a particular press, retrieve the number of images across and down (around) the plate or cylinder. Store these values in the metadata file.

### Invention Process Overview

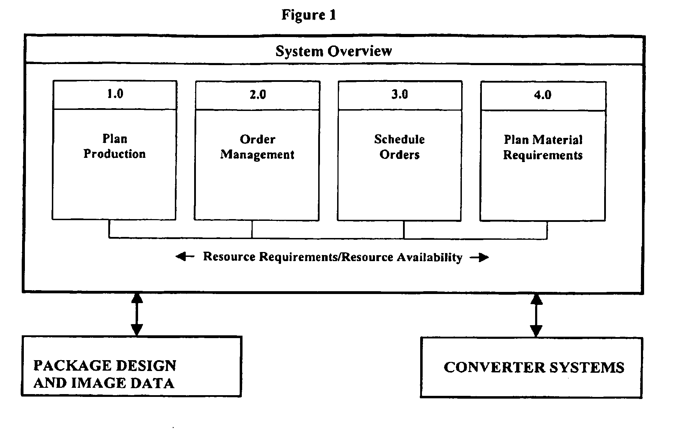

Figure 1 provides an overview of the processes involved in the method of the present invention. Referring to this figure, the Production Planning Process (Process 1.0) of the present invention is capable of operating on two time horizons, long range and near term planning. Sales & Operations Planning ("S&OP") combines forecasts of demand and production capacity to provide a long range view of production line loading, highlighting supply and demand imbalances. This long range view may be 12 months or more. Master Production Scheduling ("MPS") fine tunes the near term S&OP view over short time periods such as on a week by week basis over the next 6-8 weeks. As part of the MPS process, the total capacity of the system is divided in capacity buckets (e.g. available capacity by line, by week), which MPS in turn maintains. The capacity remaining in these buckets is the basis for checking orders to insure production capacity available to produce the ordered packages. This process in depicted in Process 2.0 of Figure 1.

The Order Management Process (Process 2.0) of the present invention is a shared activity managed jointly by the end user and the converter. The Order Management process begins with item creation by the end user (i.e., linking digital data associated with a package image with a structural specification for the package to create a packaging stock keeping unit or other unique designation for a package design). Once the item has been created, the end user can place an order by combining the item with quantity and date requirements. Upon receiving an order from the end user, the converter adds converter specific data to the item (e.g. printing cylinder numbers, ink specifications, etc.) if required, and checks for the availability of materials and line time to produce the order. If the order is a repeat order for an existing item, the entire process can be performed by the present invention automatically. Once accepted by the converter, the end user receives an acknowledgment of the converter's promised delivery date.

The Schedule Order Process (Process 3.0) of the present invention stores orders acknowledged by the system for subsequent scheduling using decision support tools. These tools allow the converter to prepare finite schedules (individual jobs sequenced for production on a particular line) for presses, laminators, slitters, and other items of converting equipment.

The Material Requirements Planning ("MRP") Process (Process 4.0) of the present invention calculates requirements for printing cylinders, substrates, inks, and adhesives based upon acknowledged orders. As orders are scheduled, the timing of material requirements is further refined. Time phased requirements are compared to quantities available in stock and quantities on order to generate net requirements for purchasing.

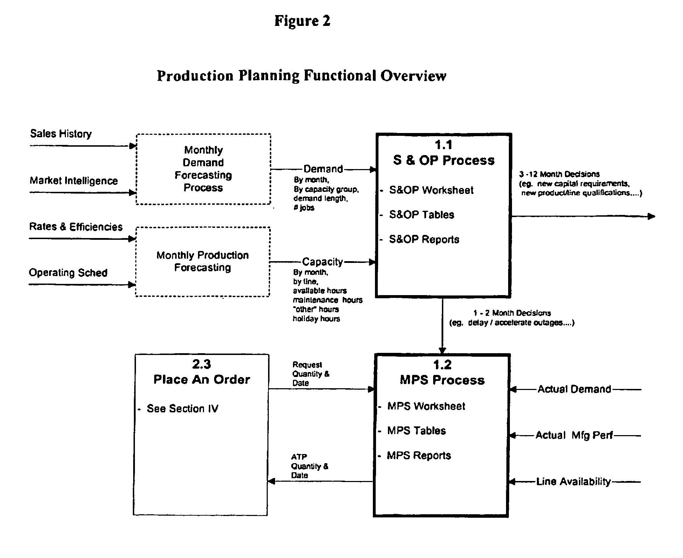

Figure 2 shows how the Production Planning and Order Management Processes described above work together to maximize profitability for the business operating the assets and simultaneously maximize reliability for the customer receiving the product.

Production planning in the present invention begins with an analysis of business options over an upcoming time period such as the next 12 months as depicted in this figure. The first step in this process is the monthly S&OP cycle. By modeling manufacturing operations using forecast demand and forecast capacity, the S&OP process loads production lines (e.g. presses, laminators, etc.) and highlights imbalances between supply and demand for resolution. This process has two outcomes: (1) long range decisions that affect the operation of the business in the 3-12 month timeframe (e.g. timing of major capital outages, planning for the ramp-up of new businesses, planning for discontinuation of existing business, etc.), and (2) short range decisions affecting operations in the 1-2 month timeframe (e.g. maintenance outages, inventory builds and draws, and execution of long range decisions whose implementation date has reached the 1-2 month time horizon). These short range S&OP decisions are a primary input to the second production planning process, Master Production Scheduling (MPS). MPS fine tunes these near term S&OP decisions for execution on a week by week basis over the next 6-8 weeks. In order to accomplish this goal, MPS evaluates near term S&OP decisions in the context of actual demand and actual capacity available. The results are used to time the execution of events (e.g. an outage), and to control the flow of orders (through the Available To Promise (ATP) functionality discussed hereinafter). S&OP and MPS both depend on computer models to forecast the impact of alternative courses of action. These models, in turn, depend on a number of parameters which are input and maintained through a series of tables (e.g. production line characteristics, the forecasts described below, and other data required to support the models).

To use the S&OP process, a user prepared demand forecast is entered as digital data in an electronic storage area of the system in accordance with the present invention. The forecast can be prepared in any way that fits the business - ranging from a simple sales estimate, to a statistical forecast adjusted for market intelligence.

Similarly, a user prepared production forecast is entered as digital data in an electronic storage area of the system in accordance with the present invention. A production forecast typically includes information such as output rates by product and line, material efficiencies by product and line, and available production hours by line.

Once the demand and production forecasts have been loaded the S&OP model is run to support the long and short range decisions described above.

One embodiment of the present invention also provides an interface between the MPS functionality and the ATP check. The MPS functionality maintains capacity buckets (e.g. available capacity by line and week). As each order is taken, an ATP check determines if the targeted bucket can accept the order without exceeding its available capacity.

The process described above will be described in more detail hereinafter.

### Invention Functionalities Detail

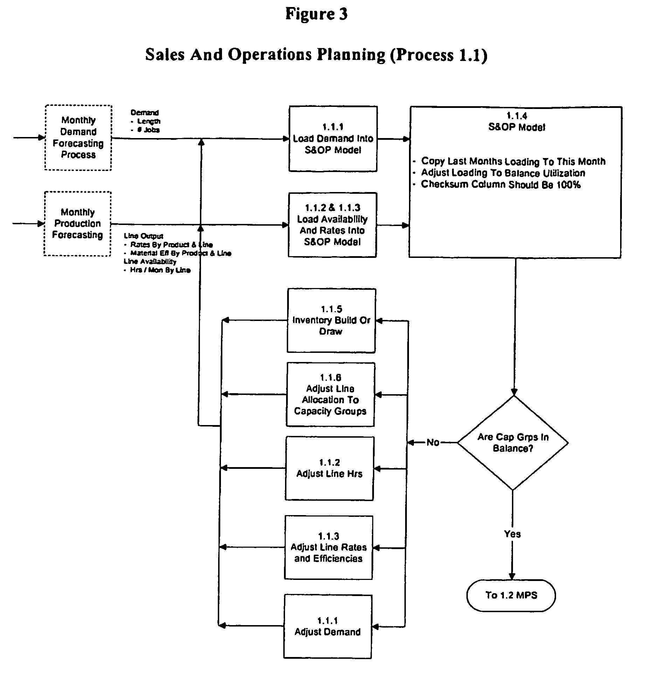

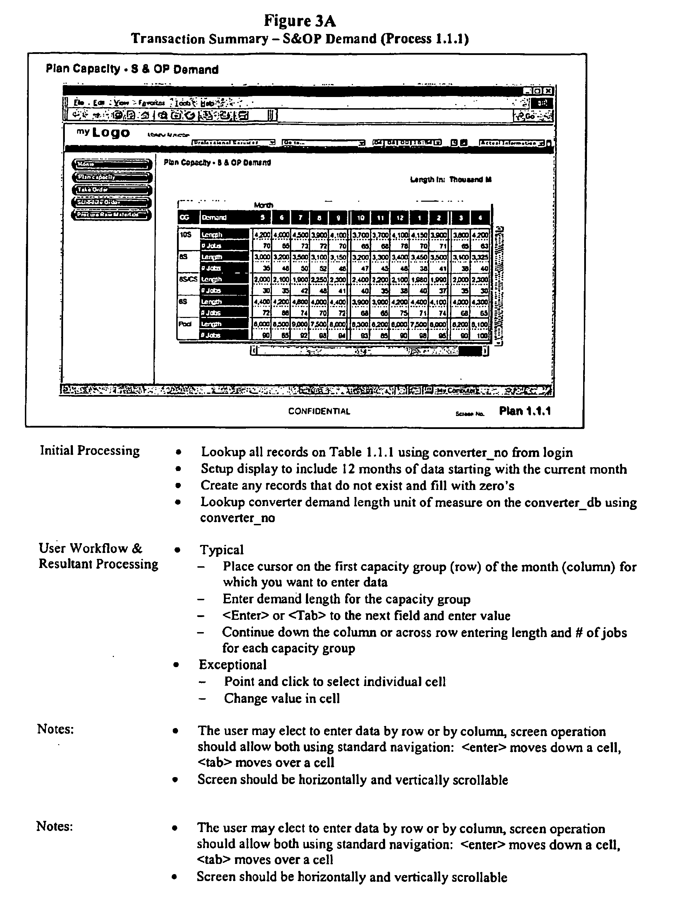

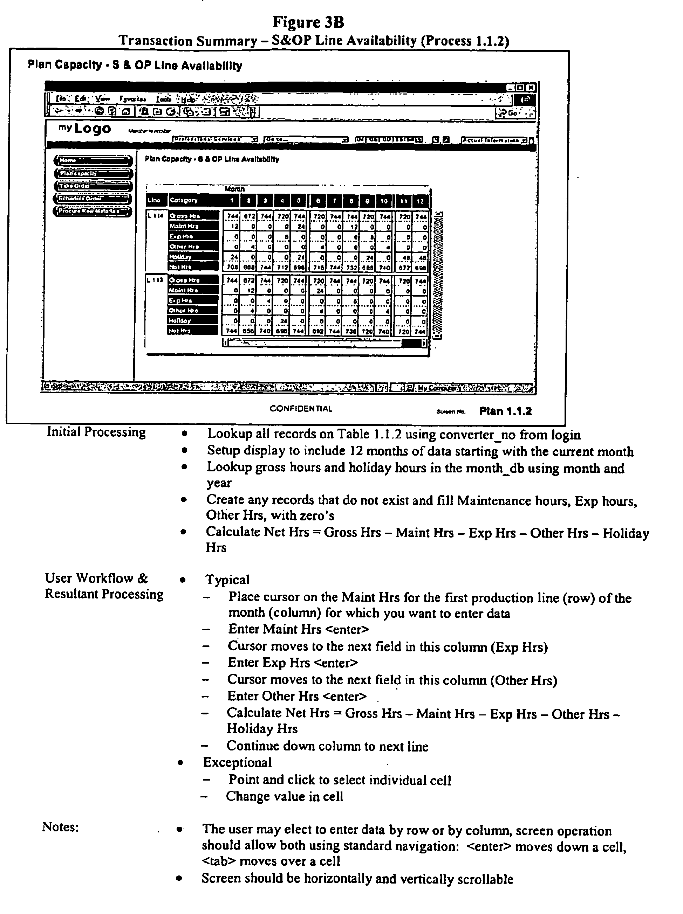

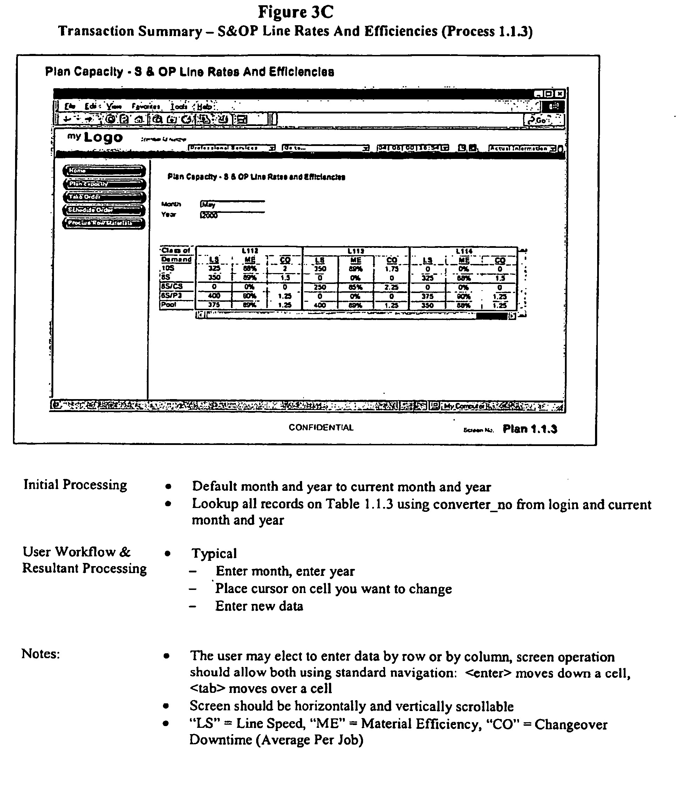

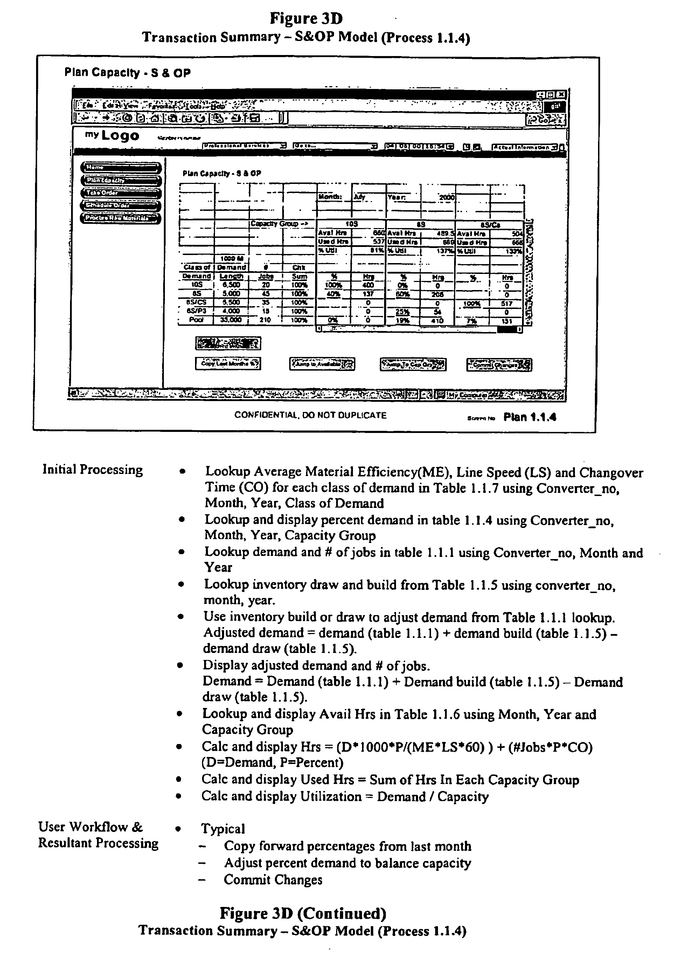

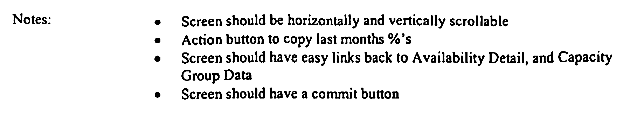

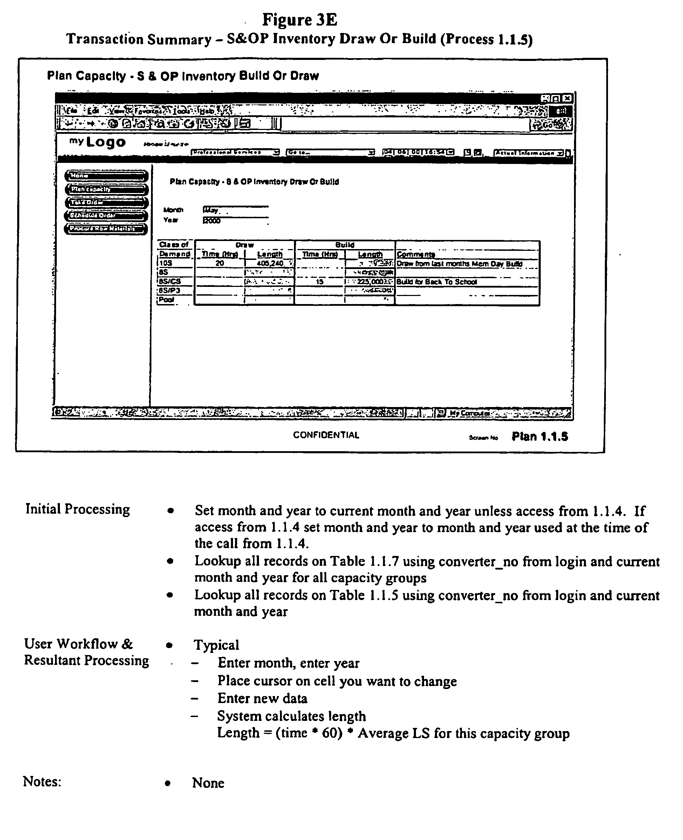

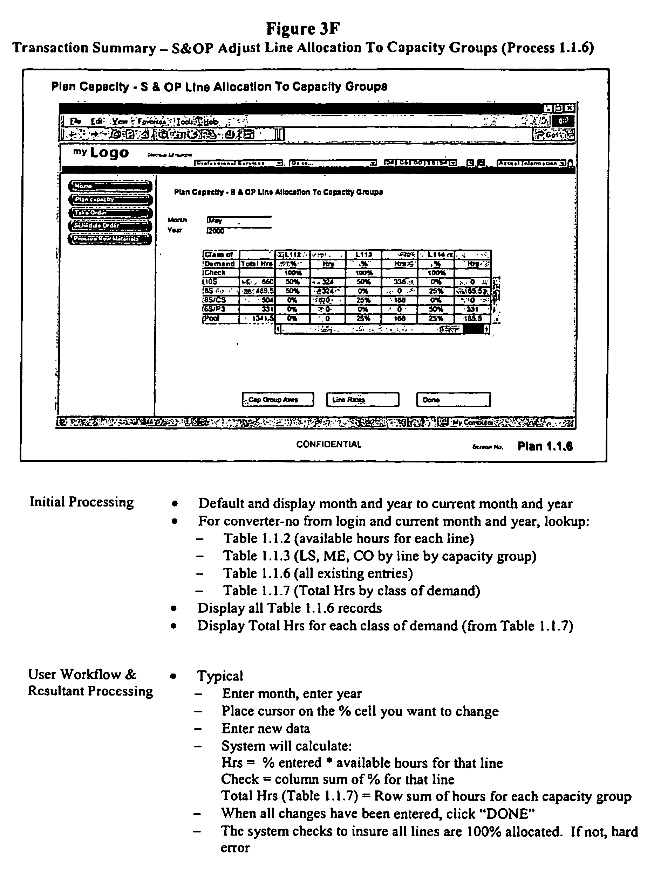

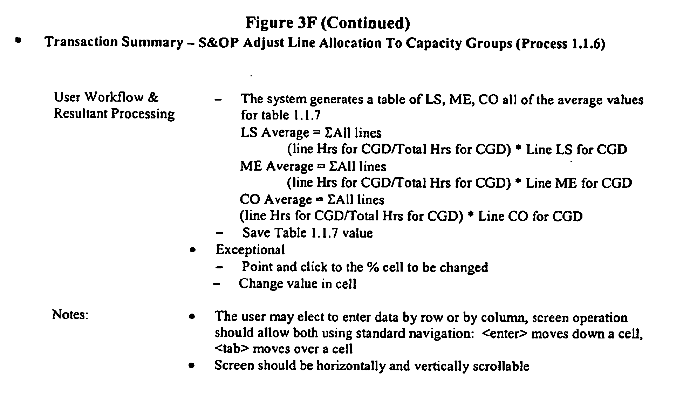

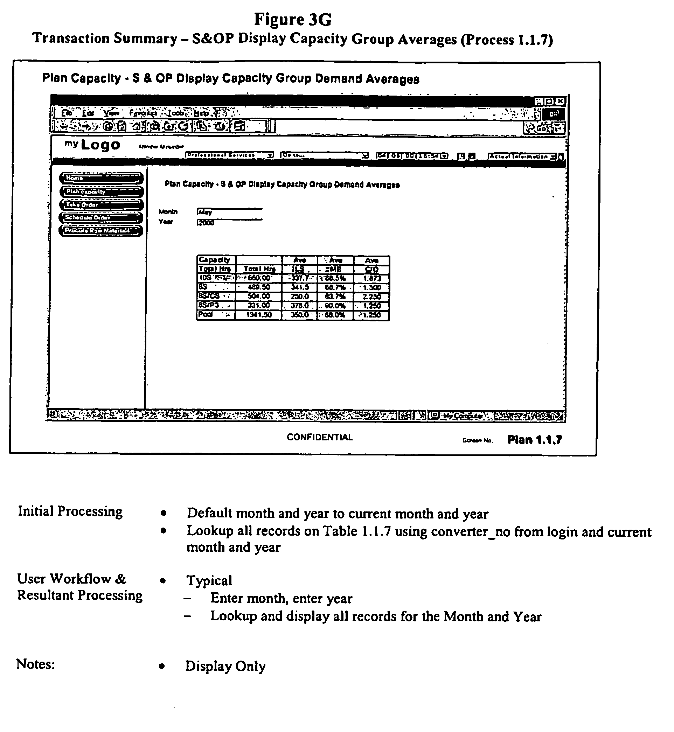

In this section, we provide a detailed description of the method and computer system of the present invention. In general, the method is represented by a process diagram identified as a number (e.g. Figure 3). A computer system to enable this method is then described in figures beginning with the method number and suffixed with a letter (e.g. Figures 3A - 3G).

Figure 3 depicts the S&OP process in accordance with the present invention. While Figure 3 and the accompanying description refer to S&OP in the context of a month, it is understood that the S&OP process in accordance with the present invention may be applied to any time interval selected by the user. Similarly, it is within the scope of the present invention to practice the S&OP process, and the other processes of the present invention, without practicing all of the process steps depicted.

At the beginning of each monthly cycle or other chosen time interval cycle, the user loads digital demand data into the S&OP model by updating the Demand Forecast Table as depicted in process step 1.1.1 of Figure 3. Figure 3A provides a transaction summary of this S&OP step, including an exemplary monitor view of this functionality accompanied by computer programming specifications for achieving this functionality. The user of the system may update the production line availability data to reflect periods when lines will not be available for production due to holidays, outages, or other sources of scheduled downtime as depicted in process step 1.1.2 of Figure 3. Figure 3B provides a transaction summary of this S&OP step, including a monitor view of this functionality accompanied computer programming specifications for achieving this functionality. The user completes the capacity forecast by loading output rates and material efficiencies for each product line combination which will be considered in loading the system as depicted in process step 1.1.3 of Figure 3. Figure 3C provides a transaction summary of this S&OP step, including an exemplary monitor view of this functionality accompanied by computer programming specifications for achieving this functionality.

As depicted in process step 1.1.4 of Figure 3, with demand and capacity updated, the user runs the S&OP model. Initially, the model assigns demand to production units based on the final loading used in the previous S&OP cycle. The user reviews the resulting line utilizations and attempts to resolve imbalances by making adjustments in line loading. Imbalances which cannot be resolved by moving demand between lines require changes in assumptions (i.e. by changing data in the tables holding these assumptions). Figure 3D provides a transaction summary of this S&OP step, including an exemplary monitor view of this functionality accompanied by computer programming specifications for achieving this functionality.

One data input area in which assumptions can be changed is the Inventory Adjustment Table depicted in process step 1.1.5 of Figure 3. This process allows the user to move capacity from periods where the system is underutilized to periods where the system is oversold by building inventory in the former periods and consuming it in the later. Figure 3E provides a transaction summary of this S&OP step, including an exemplary monitor view of this functionality accompanied by computer programming specifications for achieving this functionality.

Another data input step in which assumptions can be changed is the Capacity Group Assignment Table depicted as process step 1.1.6 of Figure 3. The S&OP model loads demand onto capacity groups (i.e. virtual lines composed of hours from physical lines having similar manufacturing capabilities). This process allows the user to shift hours from under loaded capacity groups to overloaded ones in order to resolve supply imbalances. Figure 3F provides a transaction summary of this S&OP step, including an exemplary monitor view of this functionality accompanied by computer programming specifications for achieving this functionality

When capacity groups are utilized, production rates and efficiencies for each capacity group must be created by averaging the rates and efficiencies of the lines comprising the capacity groups. Figure 3G provides a transaction summary of the S&OP step (1.1.7), including an exemplary monitor view of this functionality accompanied by computer programming specifications for achieving this functionality.

An embodiment of the system in accordance with the present invention allows the user to resolve supply imbalances by changing the line availability assumptions originally loaded in process step 1.1.2. For example, the user could decide to delay a planned maintenance outage or to schedule work on a holiday. The user may also resolve supply imbalances by adjusting the production rates and efficiencies originally loaded in process step1.1.3. For example, the user could decide to accelerate the implementation of a previously planned productivity program.

Another way that a user can resolve imbalances in accordance with an embodiment of the present invention to change the demand forecast originally loaded in process step 1.1.1. For example, the user might delay the ramp up of a new application or other piece of new business.

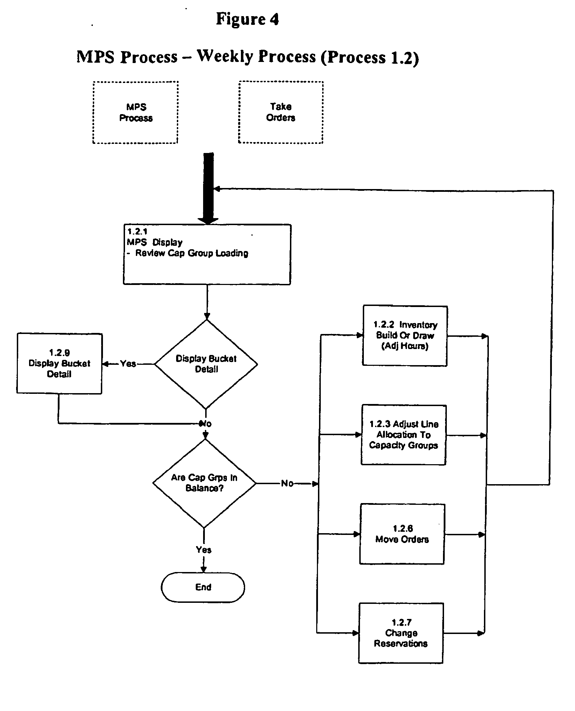

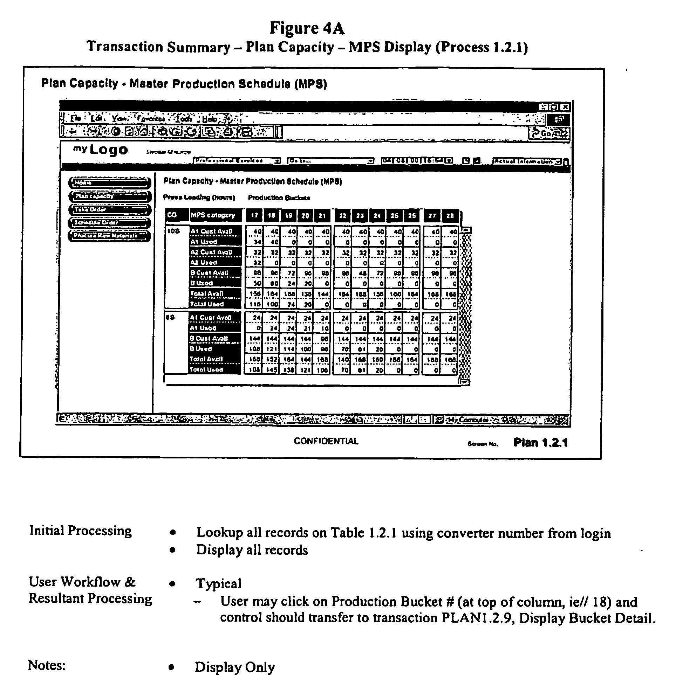

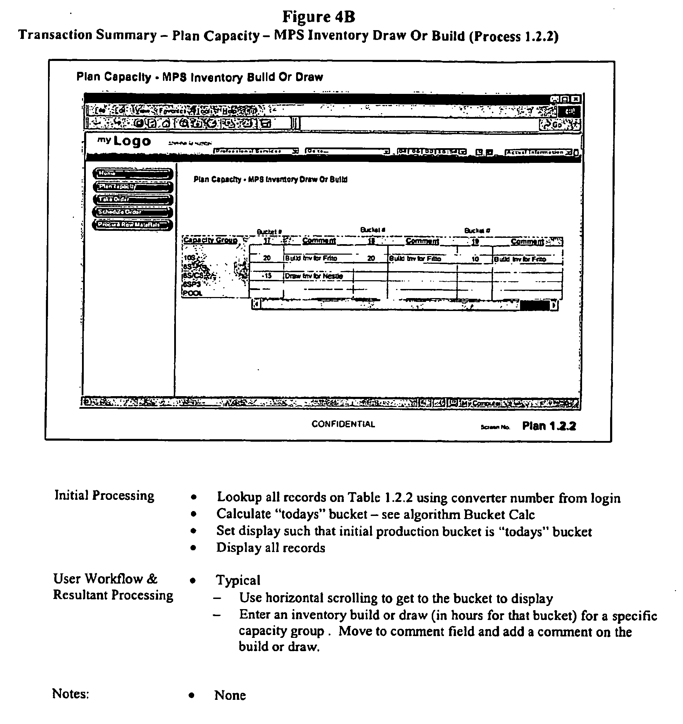

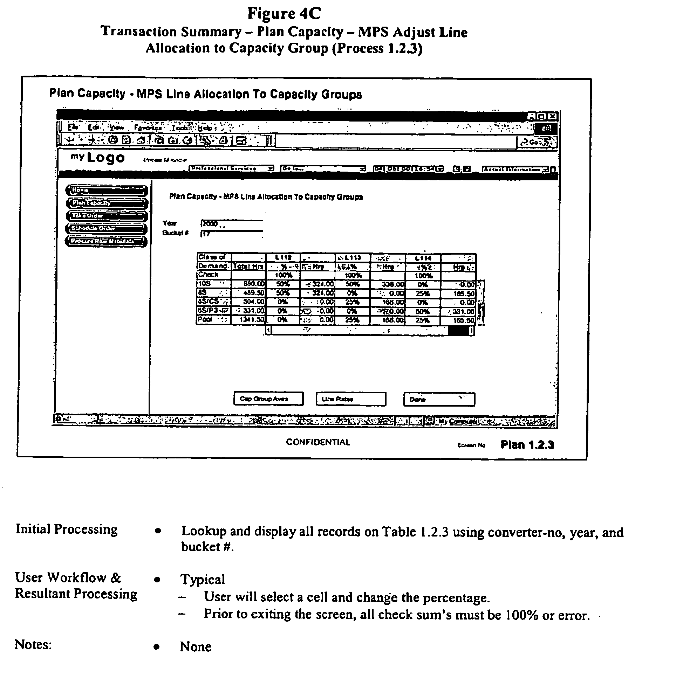

Figure 4 depicts the steps which are part of the MPS process in accordance with the present invention. While Figure 4 and the accompanying description refer to MPS in the context of a week, it is understood that the MPS process in accordance with the present invention may be applied to any time interval selected by the user. Similarly, it is within the scope of the present invention to practice the MPS process, and the other processes of the present invention, without practicing all of the process steps depicted.

Referring to Figure 4, as depicted in process step 1.2.1, at the beginning of each MPS cycle, the present invention provides an MPS summary (monitor display) depicting available and remaining capacity by capacity group. Figure 4A provides a transaction summary of this MPS step, including an exemplary monitor view of this functionality accompanied by computer programming specifications for achieving this functionality. The computer is further programmed to allow planned inventory draws or builds to be changed as depicted in process step 1.2.2. Figure 4B provides a transaction summary of this MPS step, including an exemplary monitor view of this functionality accompanied by computer programming specifications for achieving this functionality.

Process step 1.2.3 in Figure 4 depicts a second table where the present invention allows assumptions to be changed. This data is referred to as the Capacity Group Assignment Table. The MPS model is programmed to load demand into capacity groups (i.e. virtual lines composed of hours from physical lines having similar manufacturing capabilities). Process 1.2.3 allows the user to shift hours from underloaded capacity groups to overloaded ones in order to resolve supply imbalances. For example, if the 10S (10 Station printing line) capacity group is under loaded, some of the 10S capacity could be used to produce 8S (8 Station printing line) demand since a line with 10 stations can substitute for a line with 8 stations. Figure 4C provides a transaction summary of this MPS step, including an exemplary monitor view of this functionality accompanied by computer programming specifications for achieving this functionality.

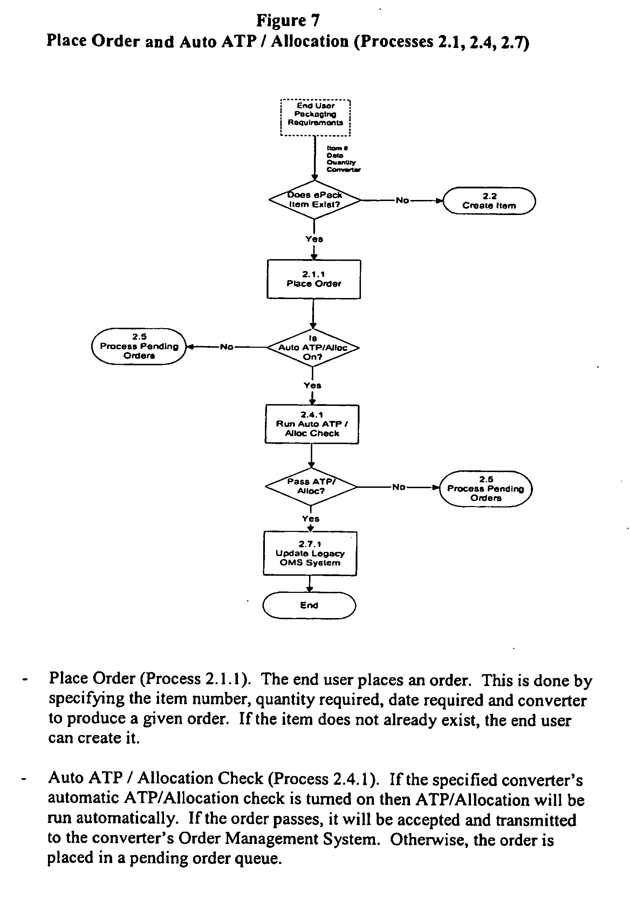

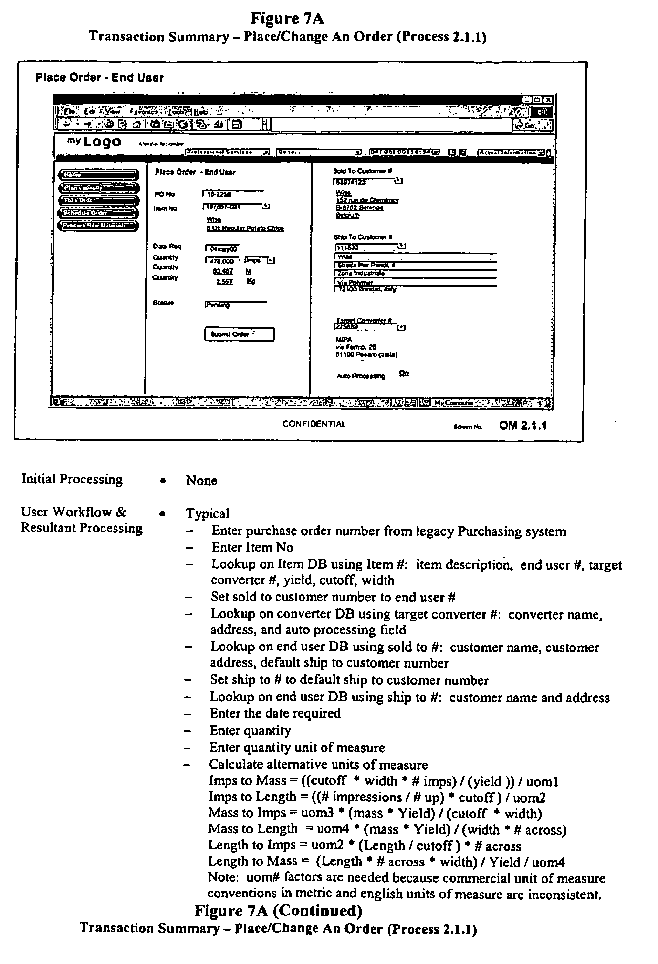

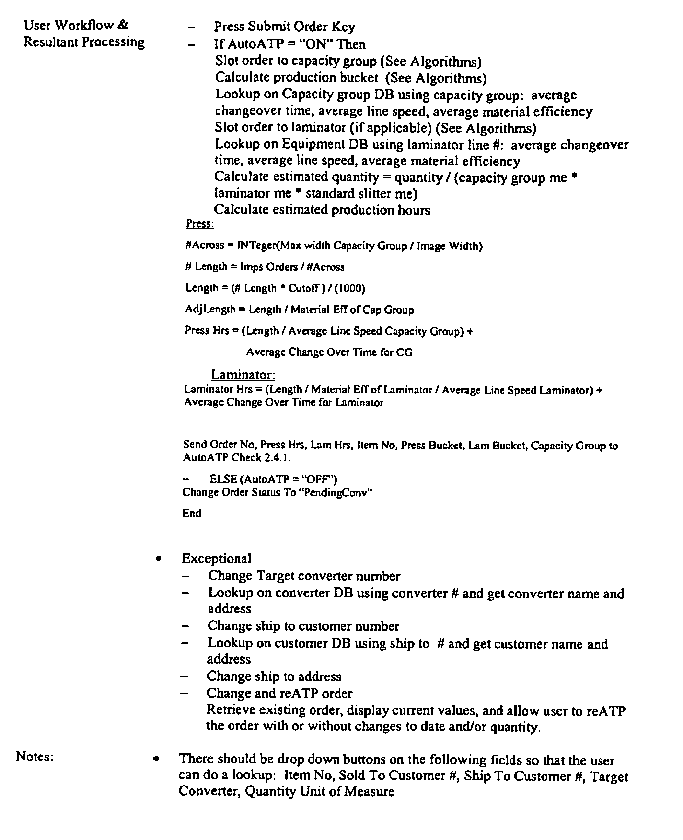

In an embodiment of the present invention, the computer is also programmed to allow orders to be moved from one production bucket to another bucket. Typically when this is done, orders are "pulled in" and produced early. Orders can only be "pushed out" and produced later if the user request date can still be met or if the user agrees to a new request date. This process capability is represented by process step 1.2.6 in Figure 4. In order to support this functionality, the computer may also be programmed to display all of the orders in a bucket with their runtime requirements to assist in choosing which orders can be "pulled in" or "pushed out". This functionality is depicted in process step 1.2.9 of Figure 4. (Orders identified in processes 1.2.6 and 1.2.9 are moved using process 2.1.1 shown in Figure 7A.)

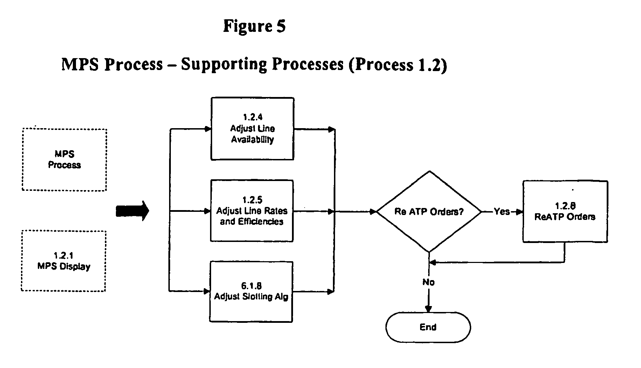

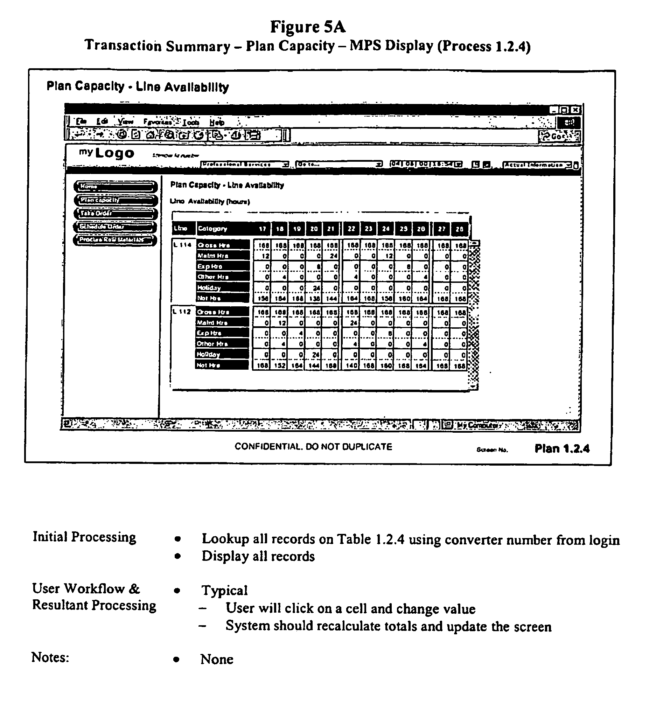

In one embodiment, the computer is also programmed to allow customers time reservations to be changed when actual demand differs from these customer reservations, and the customer agrees with this change. This process is represented by process step 1.2.7 of Figure 4 and is executed using process 1.2.4 depicted in Figure 5A.

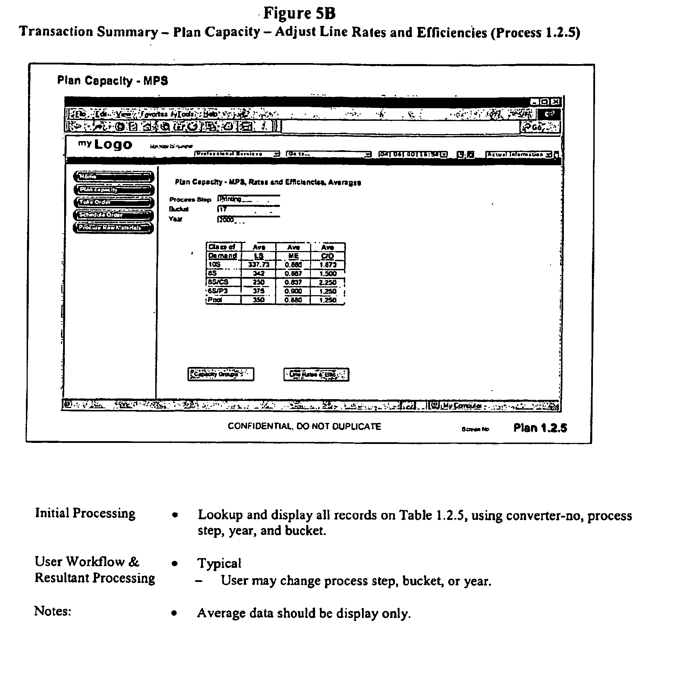

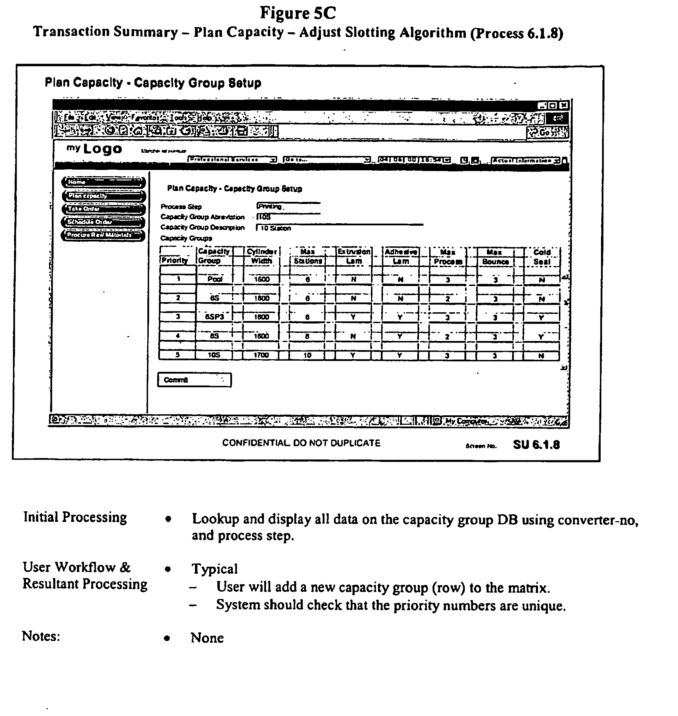

MPS depends on a number of supporting assumptions concerning the planned availability, operability, and capability of each production line. These assumptions change over time and need to be updated periodically. Figure 5 depicts how the present invention accomplishes these updates. Process step 1.2.4 represents an update of the system's production line availability assumptions. Figure 5A provides a transaction summary of this MPS step, including an exemplary monitor view of this functionality accompanied by computer programming specifications for achieving this functionality. As represented by process step 1.2.5 of Figure 5, the user can adjust the production rates and efficiencies based on recent manufacturing performance. Figure 5B provides a transaction summary of this MPS step, including an exemplary monitor view of this functionality accompanied by computer programming specifications for achieving this functionality. The user may also adjust the slotting algorithm and change the way in which orders will be slotted to the capacity groups. Process step 6.1.8 of Figure 5 shows this process. Figure 5C provides a transaction summary of this MPS step, including an exemplary monitor view of this functionality accompanied by computer programming specifications for achieving this functionality. The impact of these updates on orders already in the system can be ascertained by rerunning the available to promise (ATP) process for selected orders using the revised assumptions. This capability is depicted in process step 1.2.8 of Figure 5. Orders selected for reprocessing at this step are re-ATP'd using process 2.1.1 shown in Figure 7A.

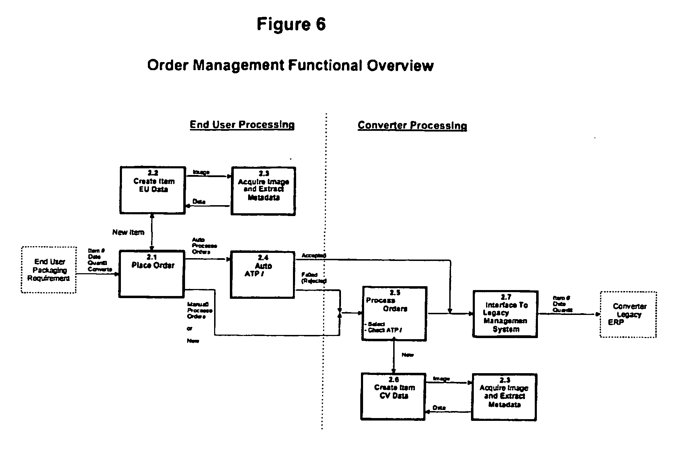

The system in accordance with the present invention is programmed with an order management system to capture order data required for production planning (Process 1.0), scheduling (Process 3.0), and material requirements (Process 4.0). Figure 6 provides a graphical overview of the order management functionality which may be programmed into the system of the present invention.

As shown in Figure 6, Order Management begins with the availability of a digital contract proof. As mentioned previously, the digital contract proof may be in PDF format or other suitable file format. The contract proof and associated artwork is stored as digital data and is provided by the end user (or an entity acting on behalf of the end user) as part of the item creation process. This file is acquired and analyzed by the present invention (Process 2.3). In addition to providing a low resolution copy of the image (for verification purposes), this process also extracts scheduling metadata from the image. Scheduling metadata is data about certain characteristics of the image that can be used to more accurately plan production and schedule the job. For example, scheduling metadata allows the scheduler to anticipate the degree of difficulty associated with printing the image using various technologies so the job can be assigned to a press which is technically capable of running the job. Algorithms for extracting scheduling metadata and are described in the foregoing detailed description of the invention.

Once the image has been acquired, the user links it to a package structure to create an End User Item (Process 2.2). With the item complete, the end user creates a purchase order in the end user's legacy purchasing system. At this point, an order for this item is entered using the present invention, and transmitted over the internet to the electronic storage area of the present invention (Process 2.1). The system in accordance with the present invention may be programmed to automatically process the order (Process 2.4) or place the order in a "pending" status for manual processing, depending on the converter's setup and selected preferences.

If the converter selects automatic order processing (Process 2.4) and a converter item corresponding to the end user item already exists, ATP and allocation are automatically checked by the system as soon as the order is entered. This step involves the following four checks:
1. Is there production capacity available to meet the requested delivery date (ATP)?
2. Does the user have sufficient allocated capacity available (Allocation)?
3. Will required production materials be available at the time of production?
4. Will printing cylinders be available at the time of production?

If the order passes these checks, it is accepted and transmitted to the legacy Order Management System (Process 2.7). If the order fails any of the checks or if the converter item does not exist, it is put into a pending order queue that must be manually processed by the converter (Process 2.5).

If the converter selects manual order processing, all orders entered by the end user are placed into a pending order queue (this queue also holds failed orders from the automatic process). To manually process this queue (Process 2.5), the converter selects an order or group of orders and runs an ATP / allocation check. If an order passes this check, the converter may accept the order and transmit data to the legacy Order Management System (Process 2.7). If an order fails due to ATP or allocation, the converter works with the end user to adjust the order quantity or the requested delivery date so that it will pass ATP and allocation. If an order fails due to the lack of production materials or printing cylinder availability, the converter may elect to expedite delivery of the production material or reallocate printing capacity to fulfill the order in the time period requested. If the converter item does not already exist, it can be created using Process 2.6.

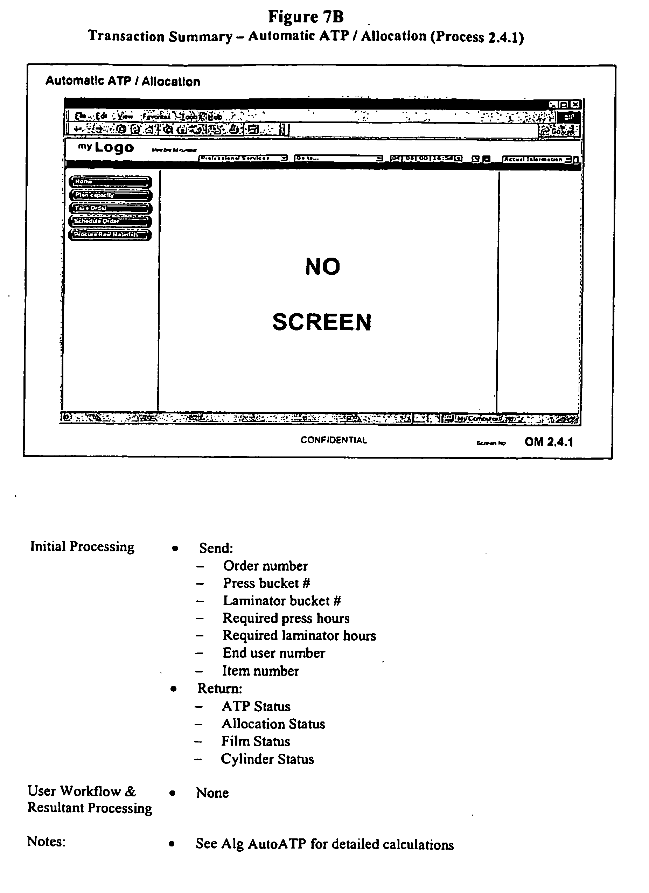

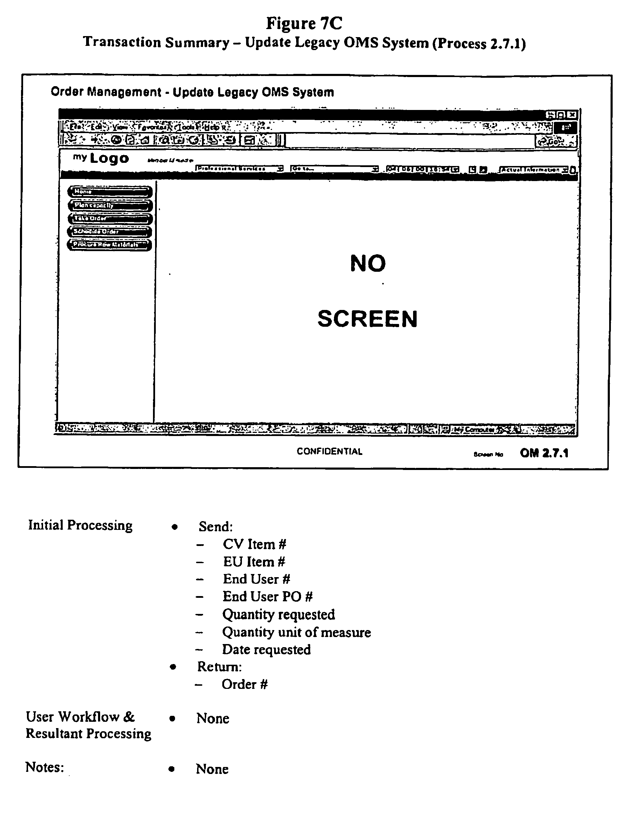

The order management functionality described in Figure 6 is implemented as a series of methods in the present invention. Figures 7 through 10 provide detailed descriptions of the individual methods which are required to implement the order management function.

Figure 7 is a graphical depiction of the order placement and ATP/allocation process (Process 2.1 and Process 2.4) in accordance with the present invention. Figures 7A - 7C provide detailed descriptions of an embodiment of the order placement step and ATP allocation processes in accordance with the present invention. Included in these Figures are transaction summaries of the order placement steps, including exemplary monitor views of this functionality accompanied by computer programming specifications for achieving this functionality.

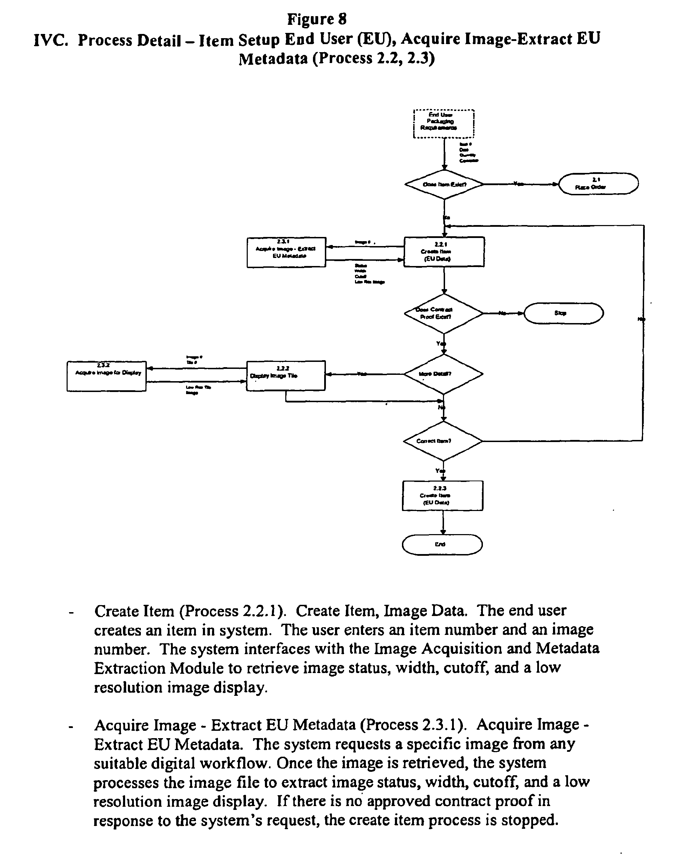

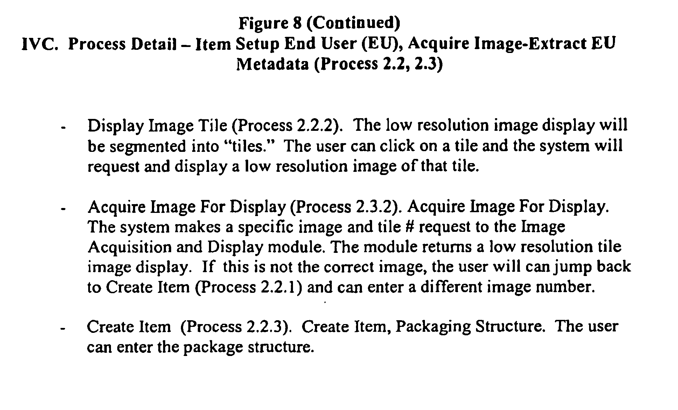

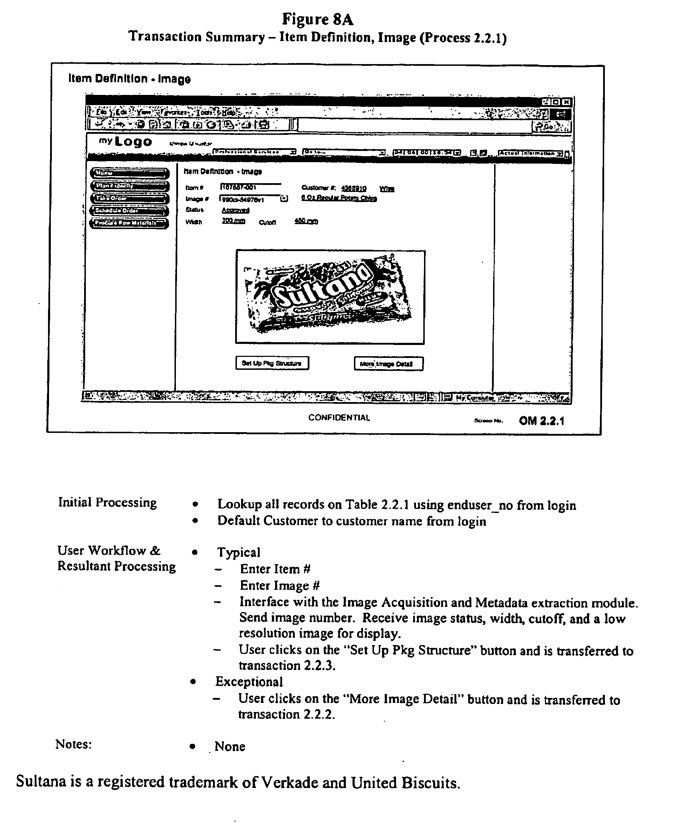

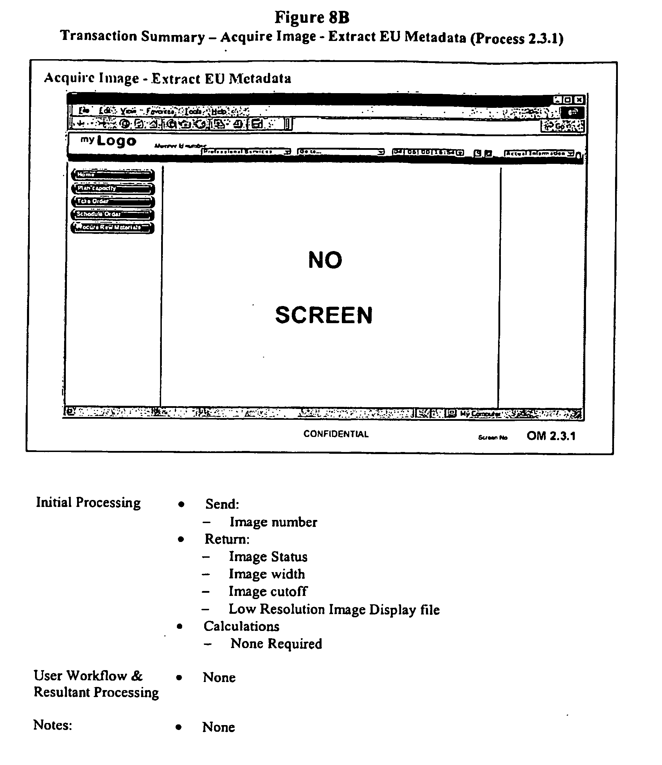

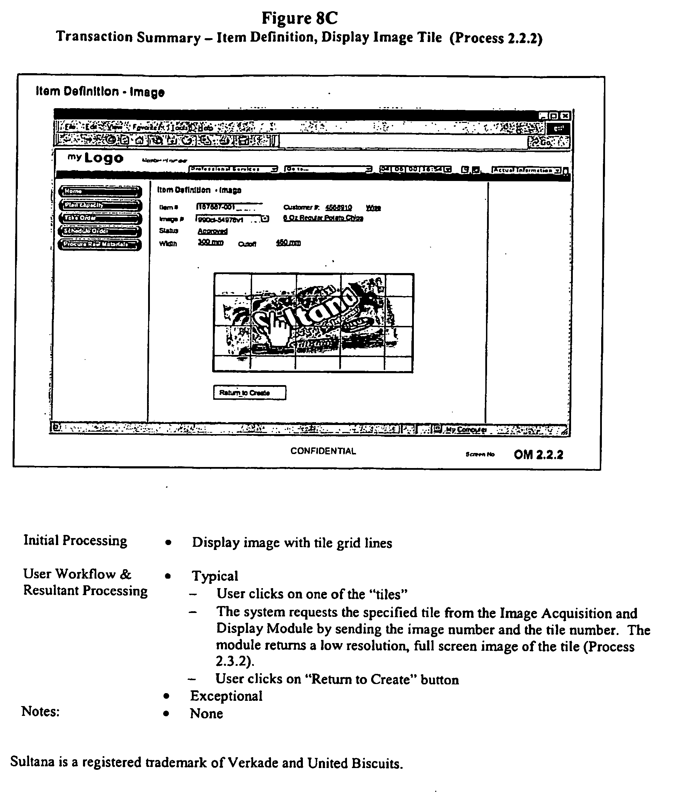

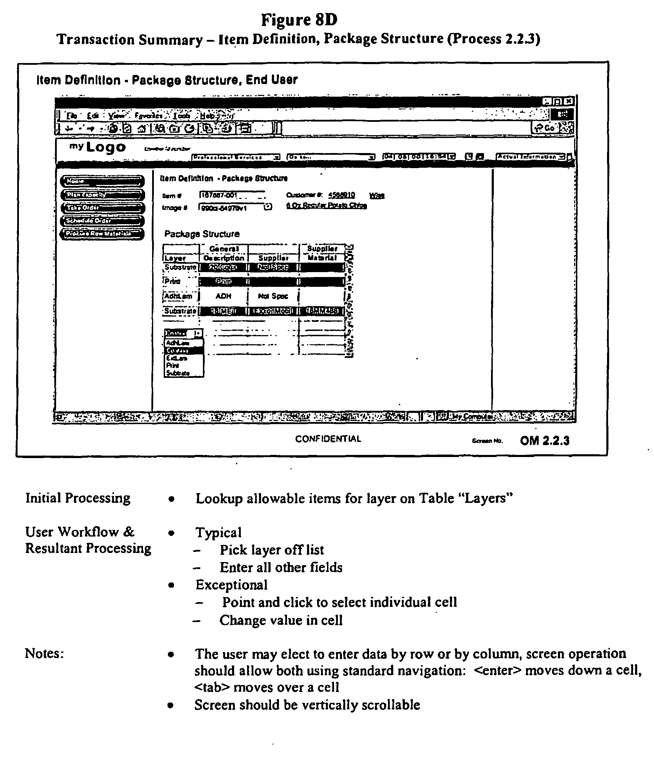

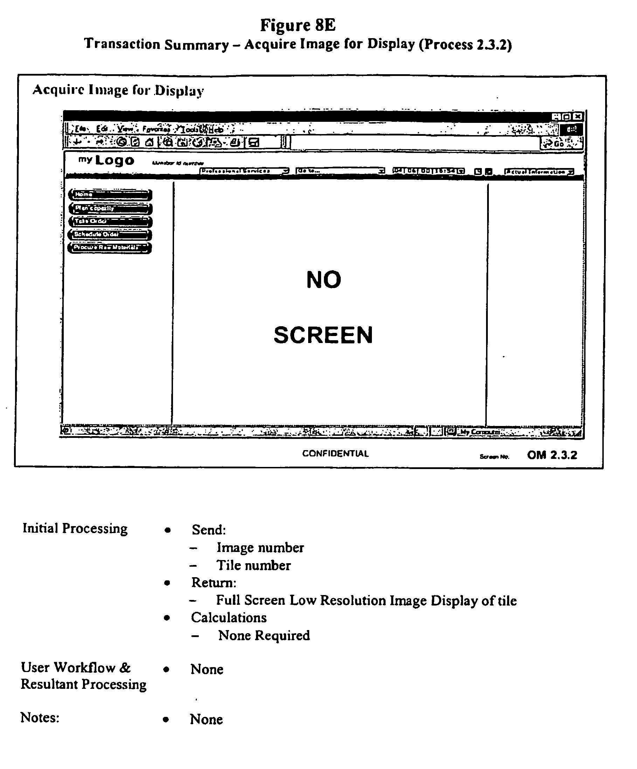

Figure 8 is a graphical depiction of the process for creating an end user item (Process 2.1). Figure 8 also shows how the process for acquiring the package design (image) and extracting end user metadata (Process 2.3.1) links to the item creation process. Figures 8A - 8E provide detailed descriptions of the process steps represented in Figure 8 according to an embodiment of the present invention. Included in these figures are transaction summaries of the package item creation steps, including exemplary monitor views of this functionality accompanied by computer programming specifications for achieving this functionality.

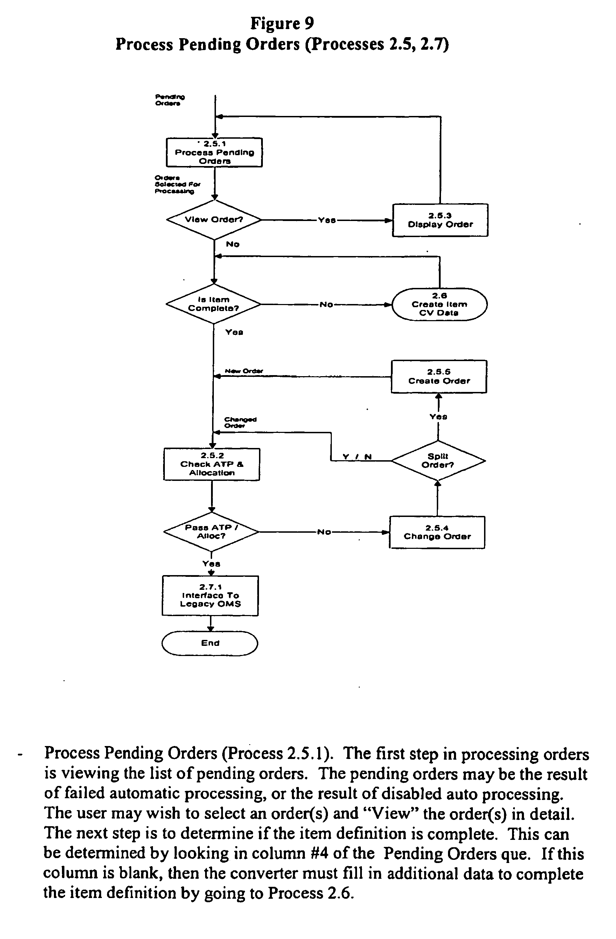

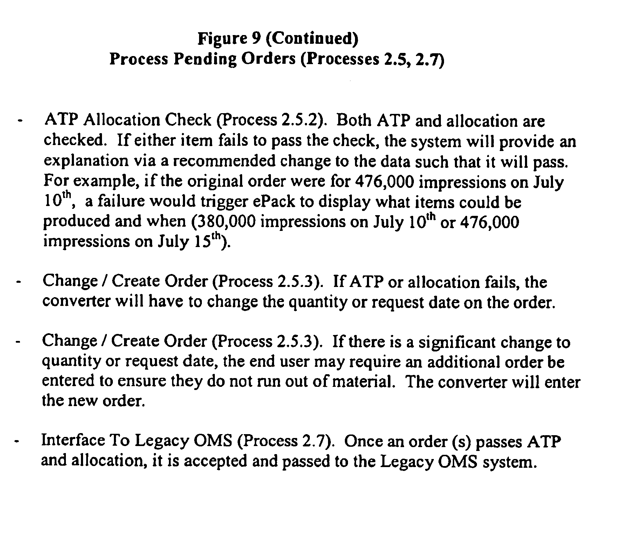

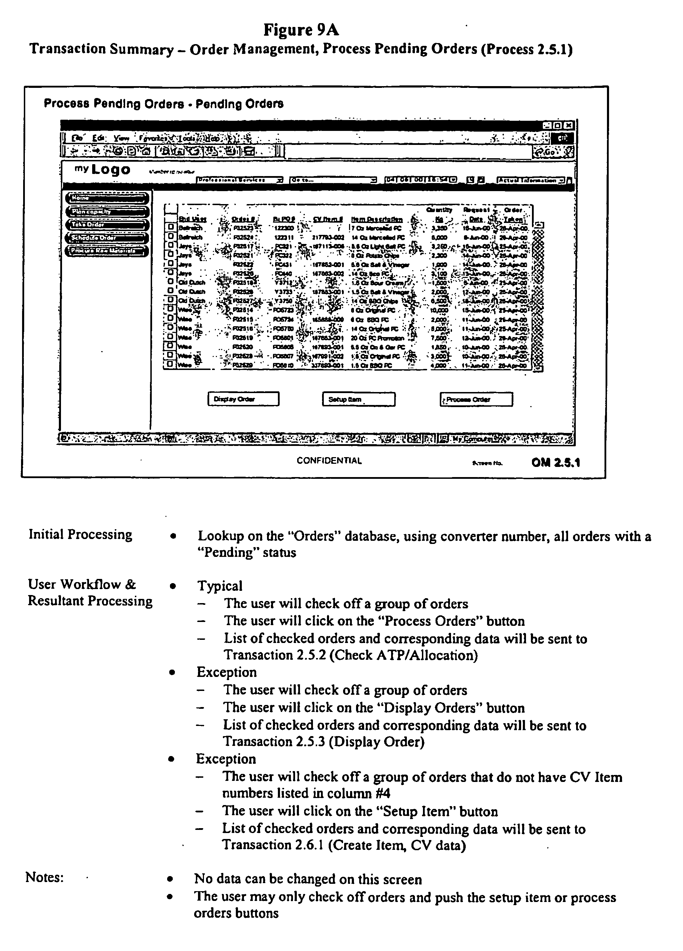

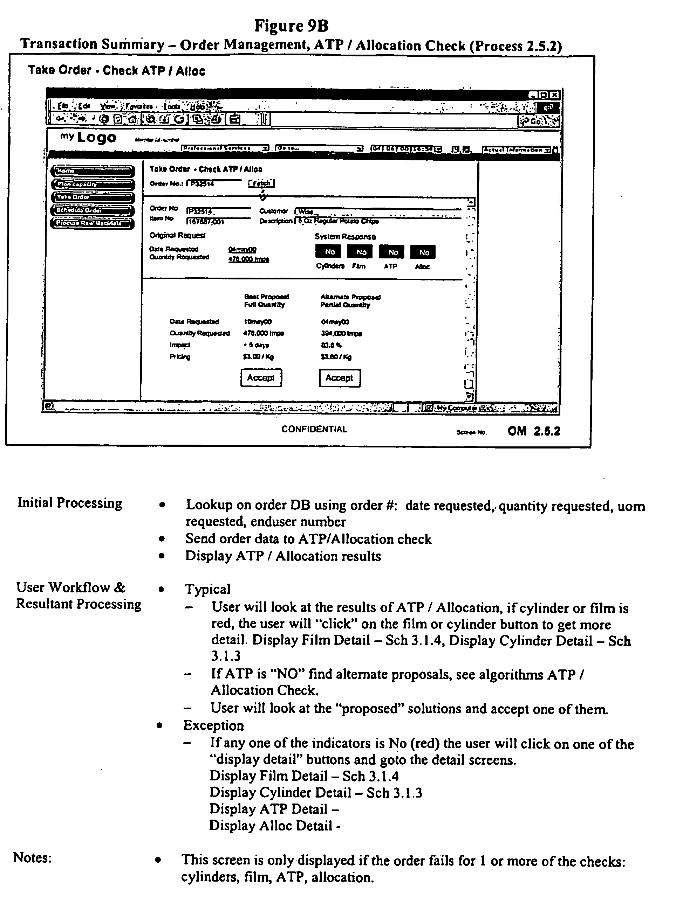

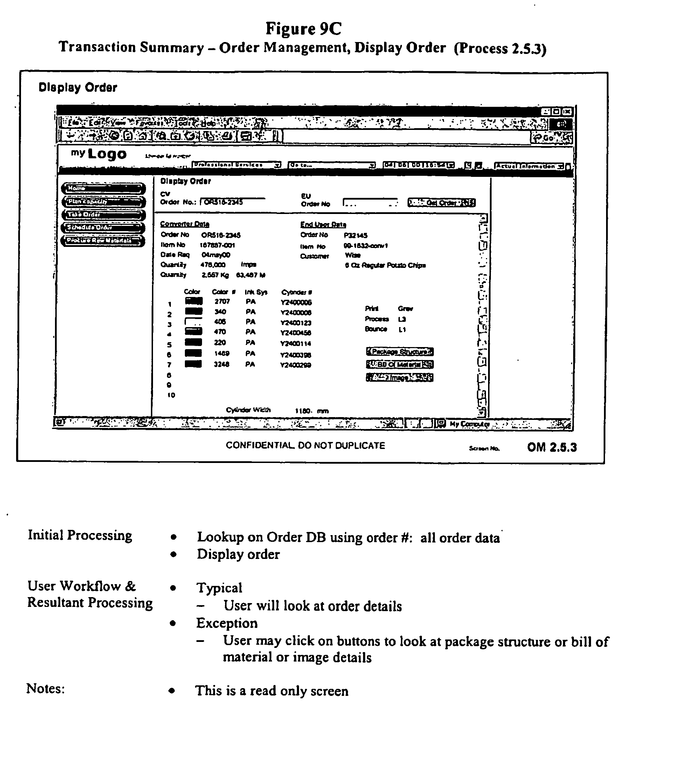

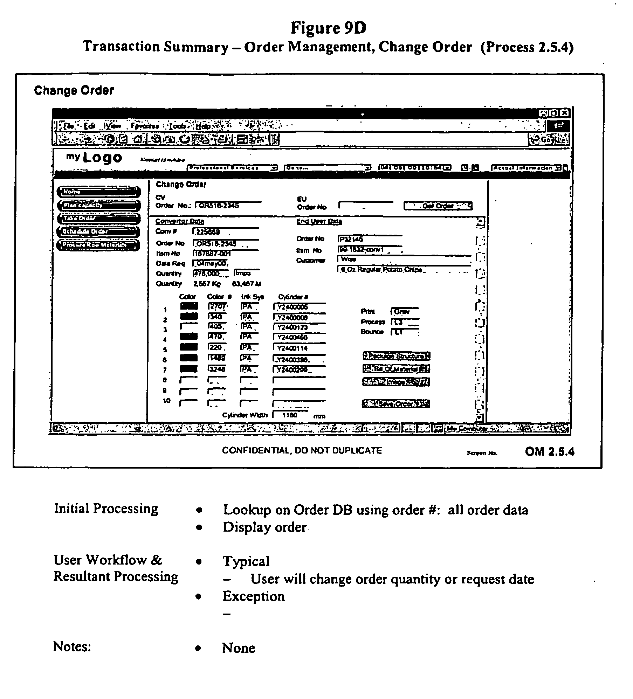

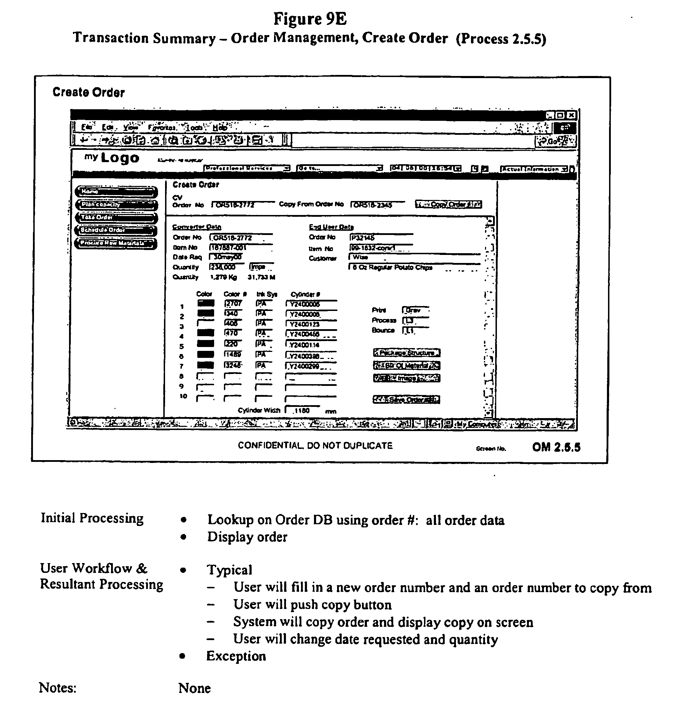

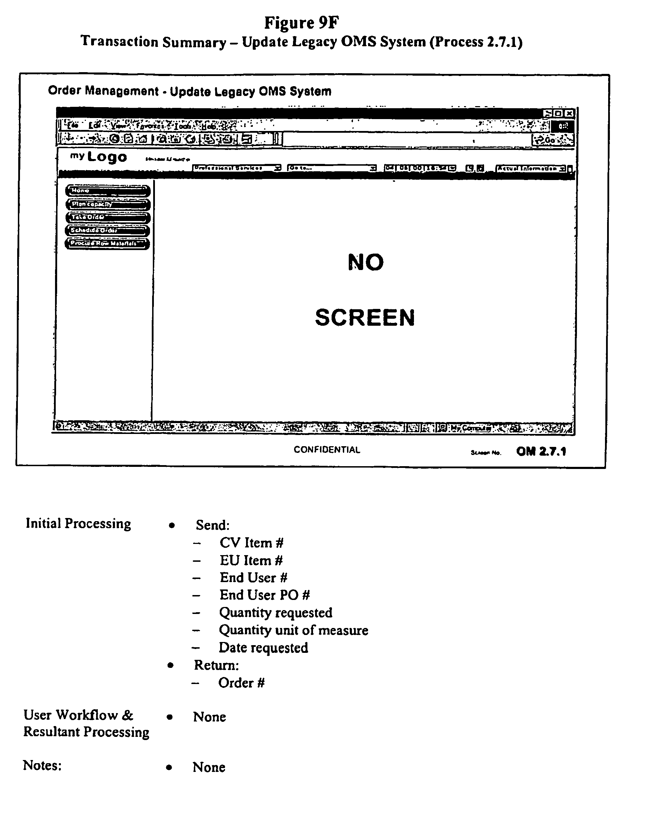

Figure 9 is a detailed graphical depiction of the order management process for handling pending orders (Process 2.5) and interfacing to the existing OMS system (Process 2.7) in accordance with the present invention. Figures 9A - 9F provide detailed descriptions of the process steps represented in Figure 9 according to an embodiment of the present invention. Included in these Figures are transaction summaries of the steps for handling pending orders, including exemplary monitor views of this functionality accompanied by computer programming specifications for achieving this functionality.

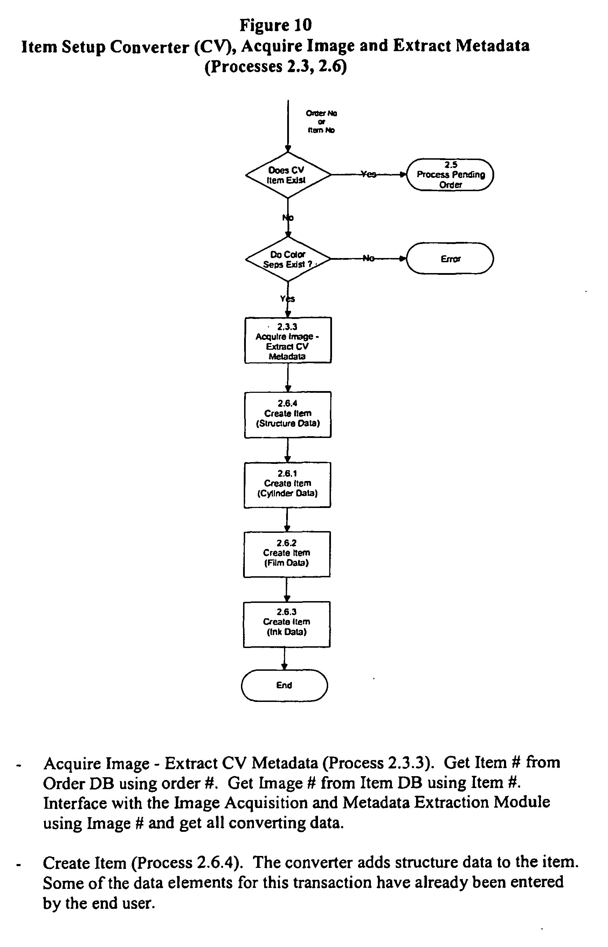

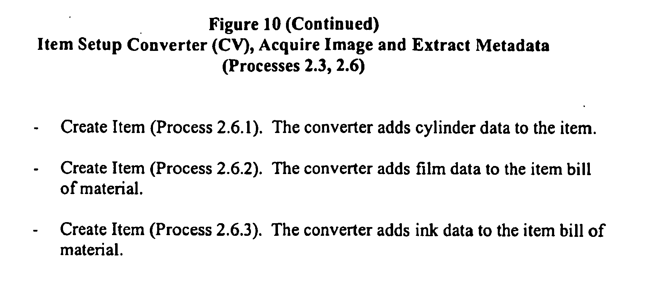

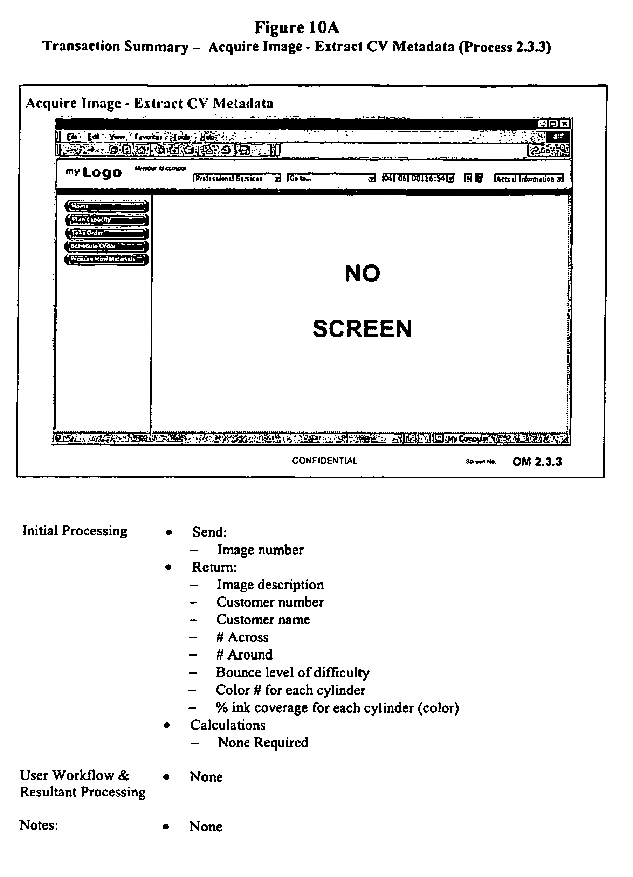

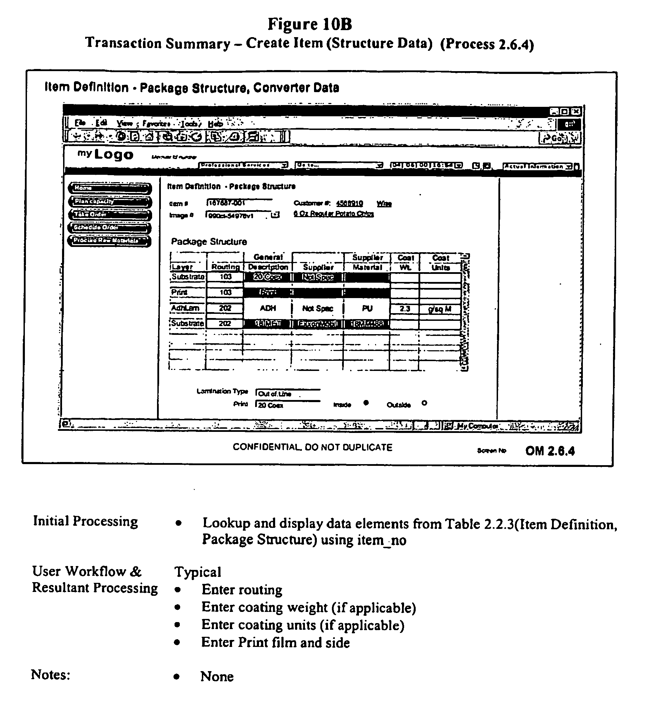

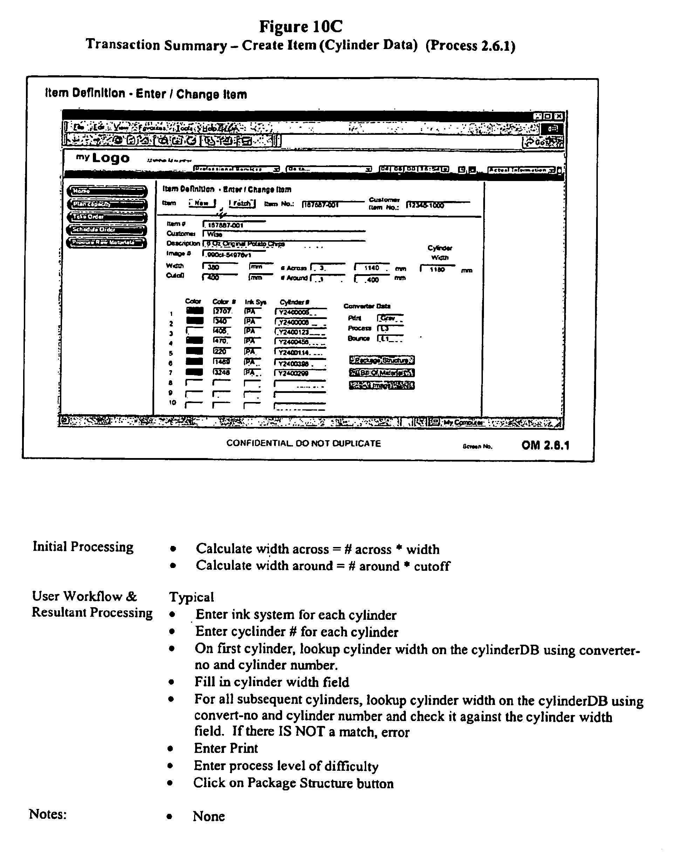

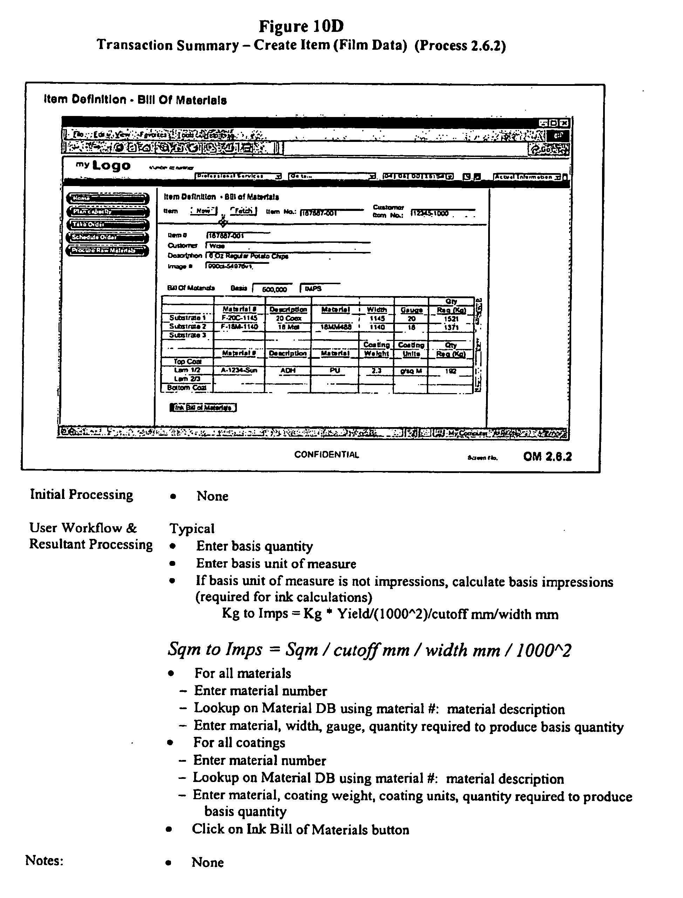

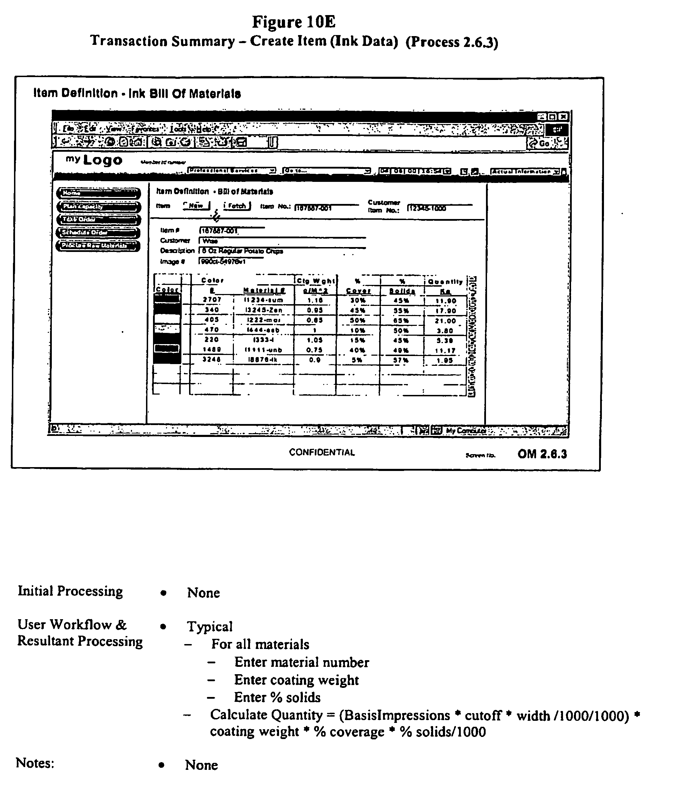

Figure 10 is a detailed graphical depiction of the process steps for a converter to complete a package item (Process 2.6), including the process for acquiring the image and extracting metadata to support this process (Process 2.3.3). Figures 10A - 10E provide detailed descriptions of the process steps represented in Figure 10 according to an embodiment of the present invention. Included in these figures are transaction summaries of the steps for a converter's creation of a package item, including exemplary monitor views of this functionality accompanied by computer programming specifications for achieving this functionality.

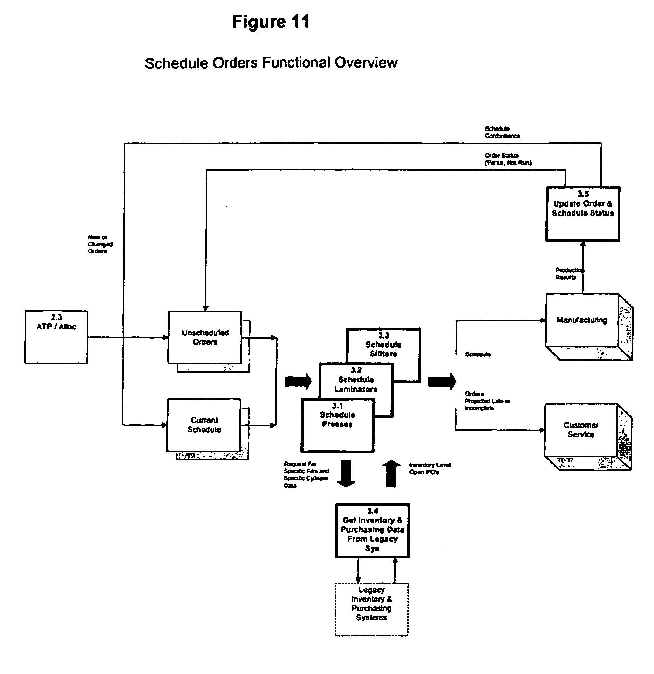

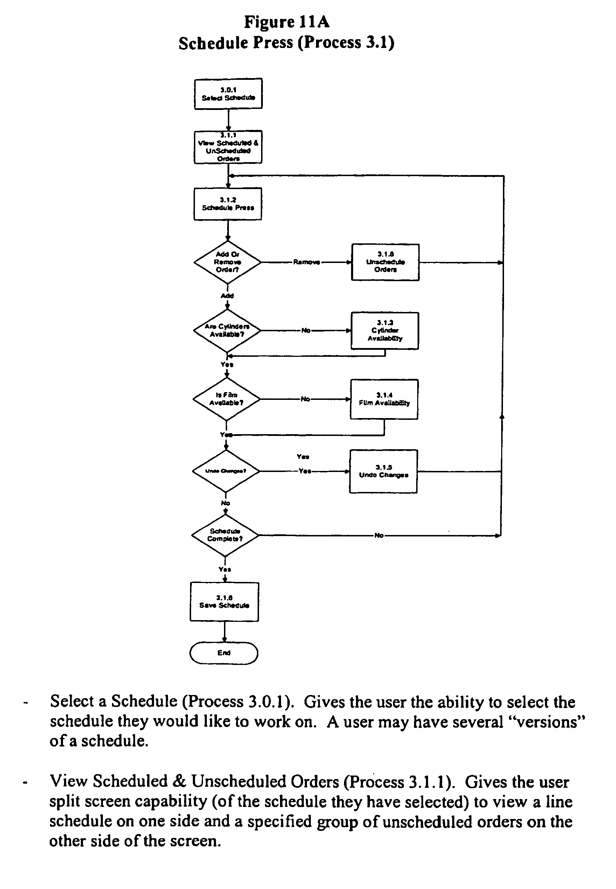

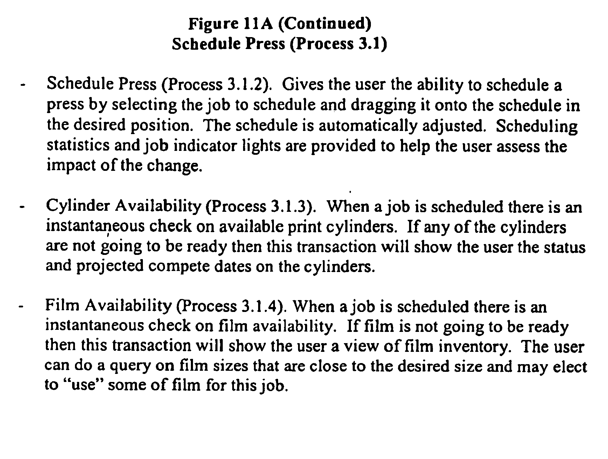

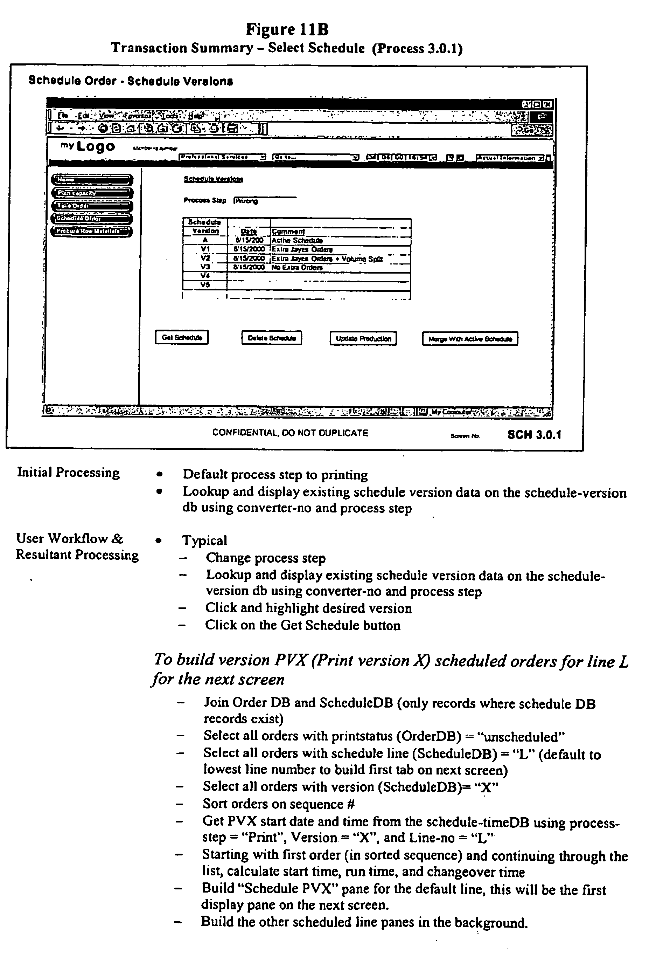

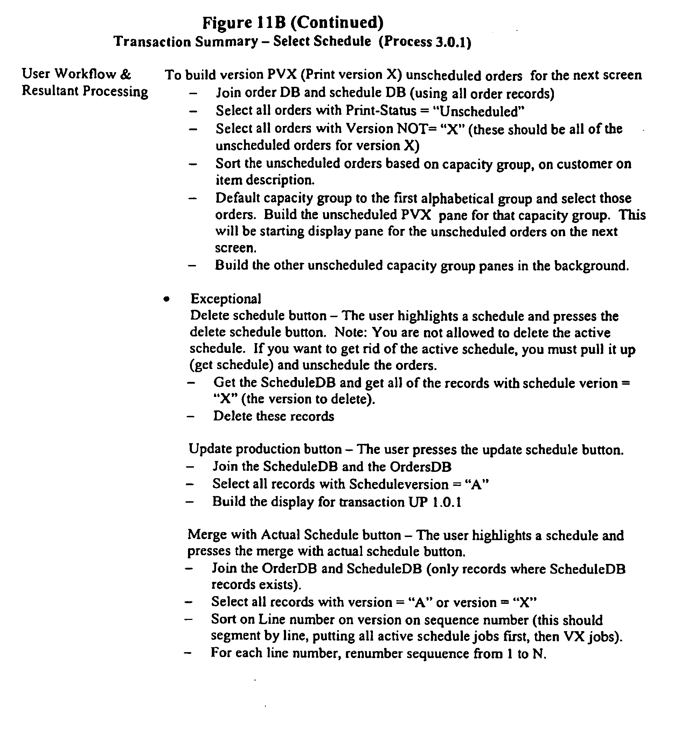

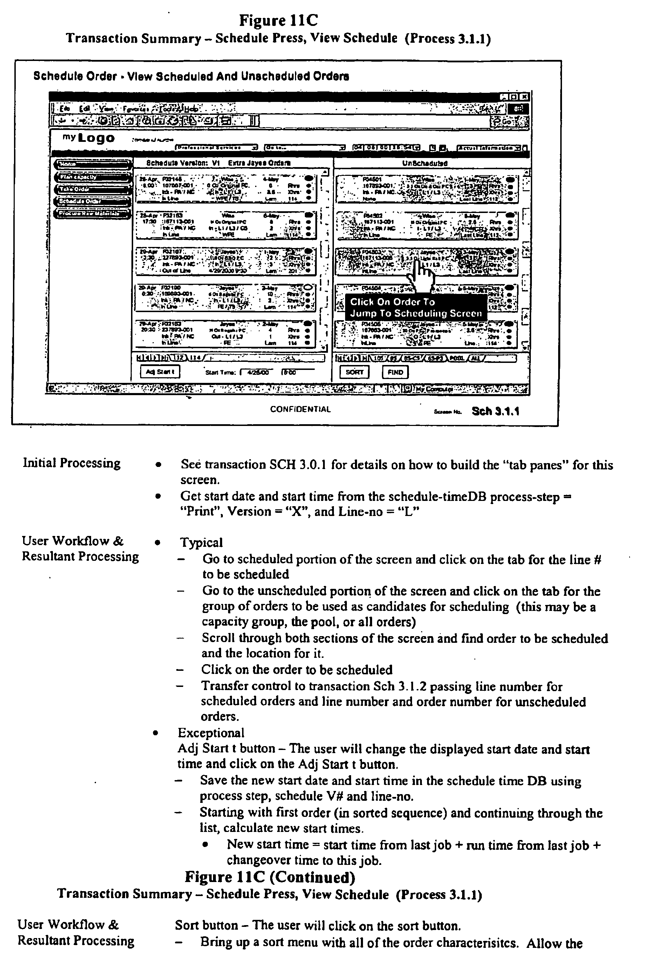

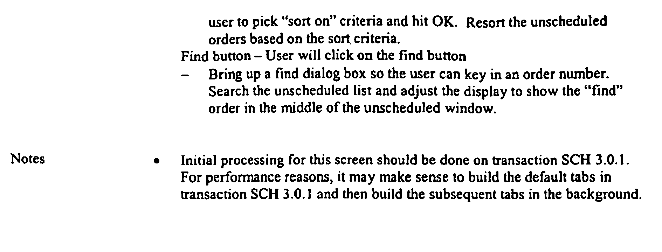

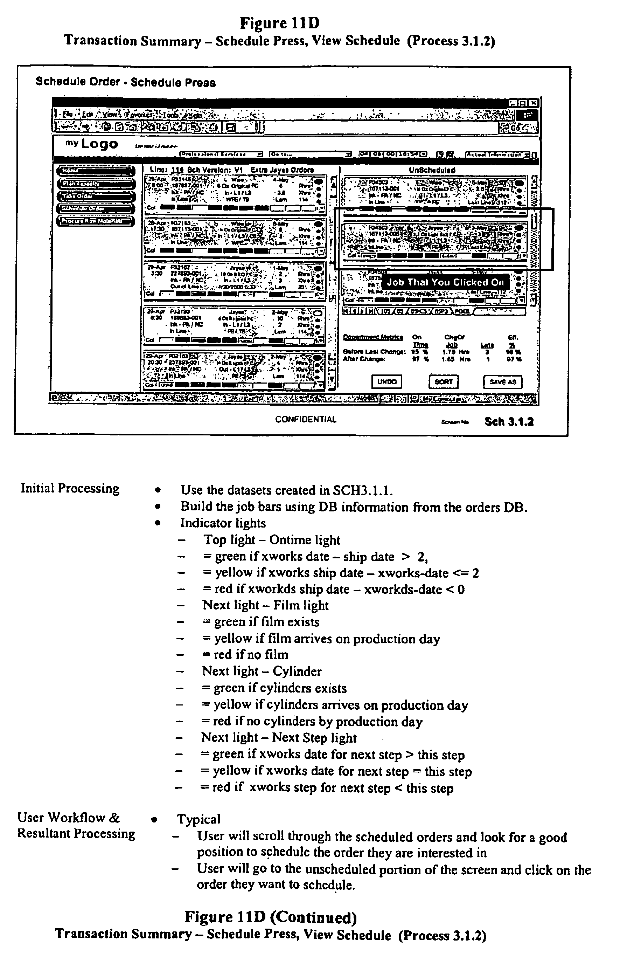

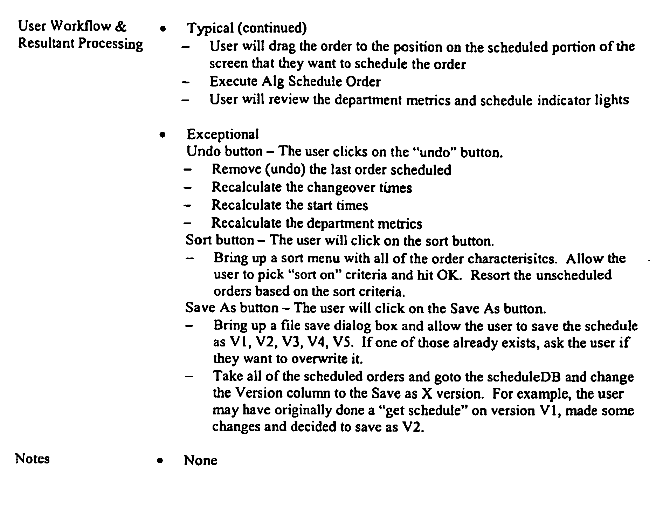

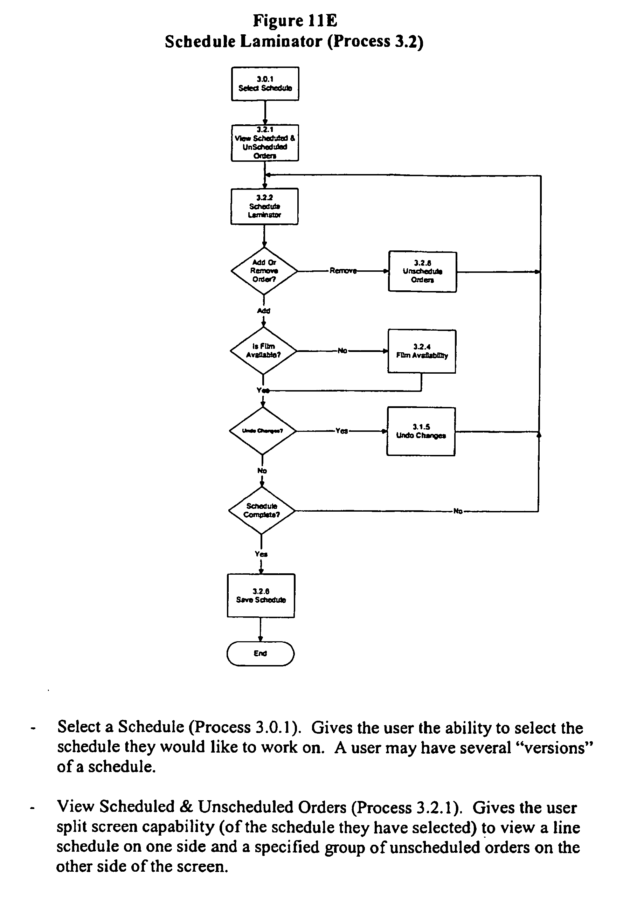

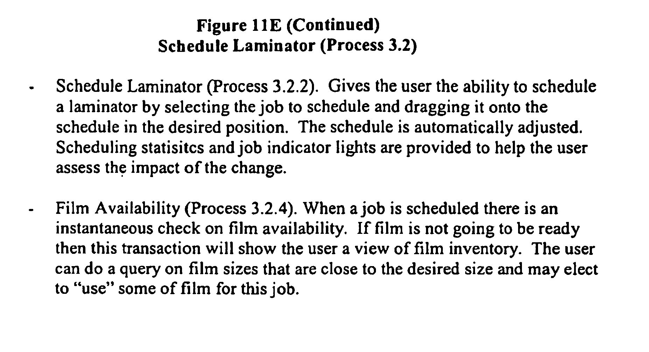

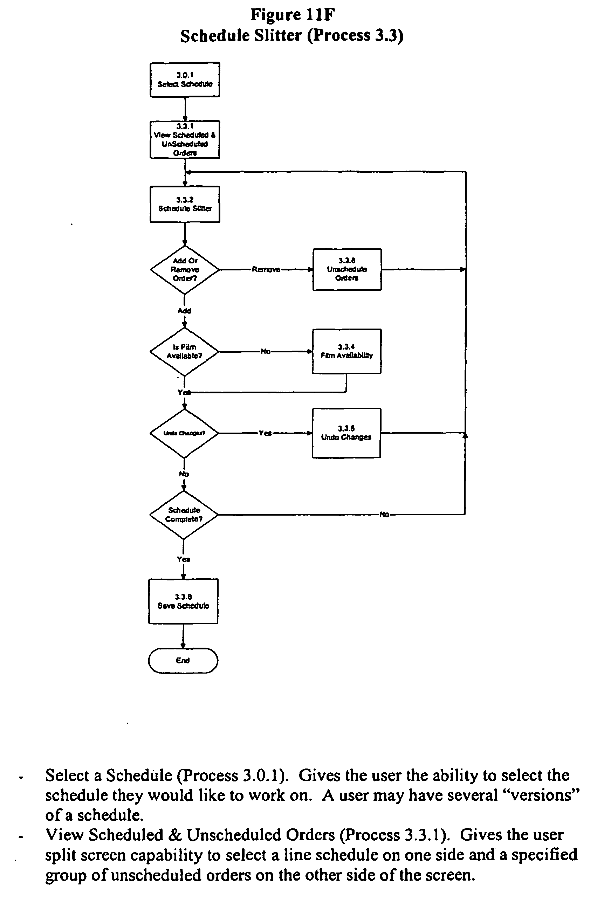

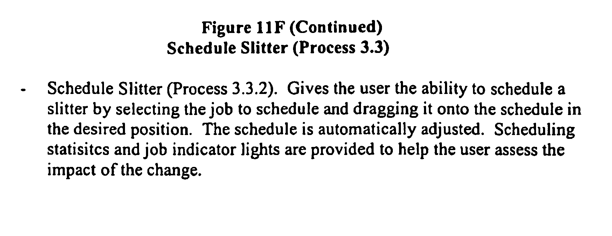

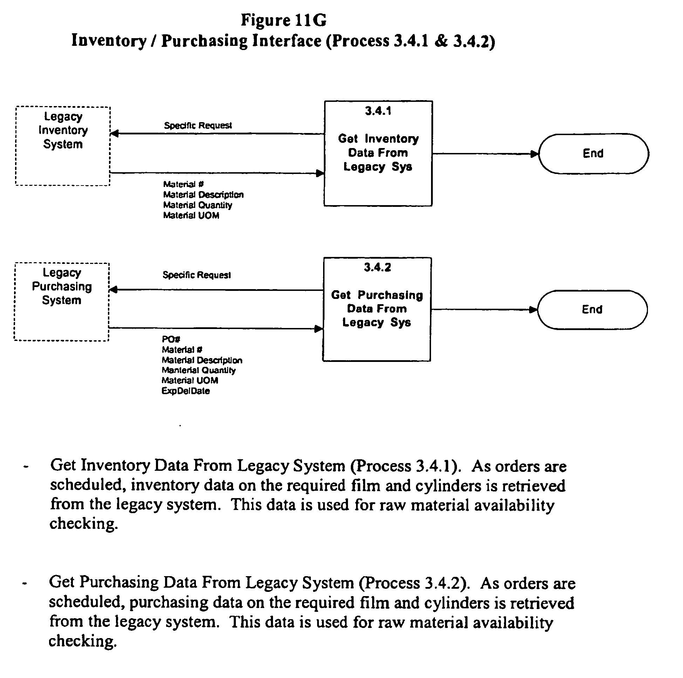

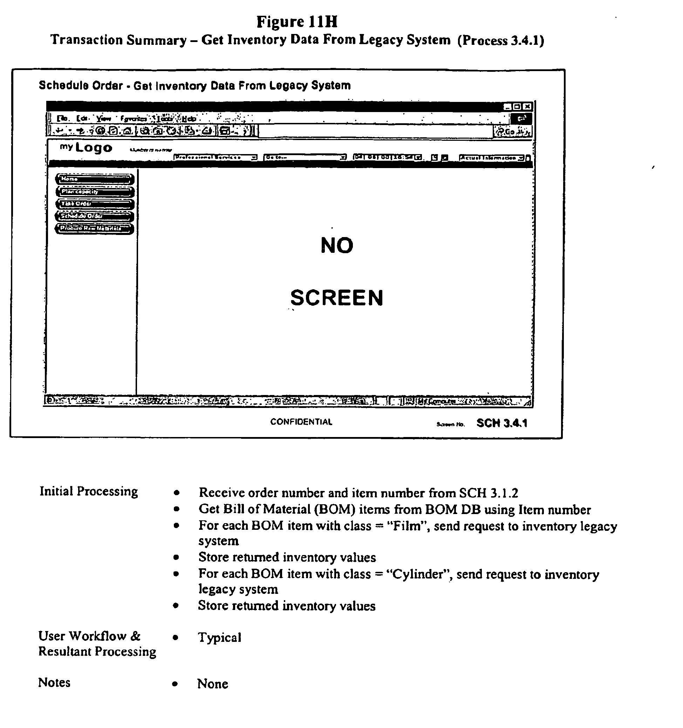

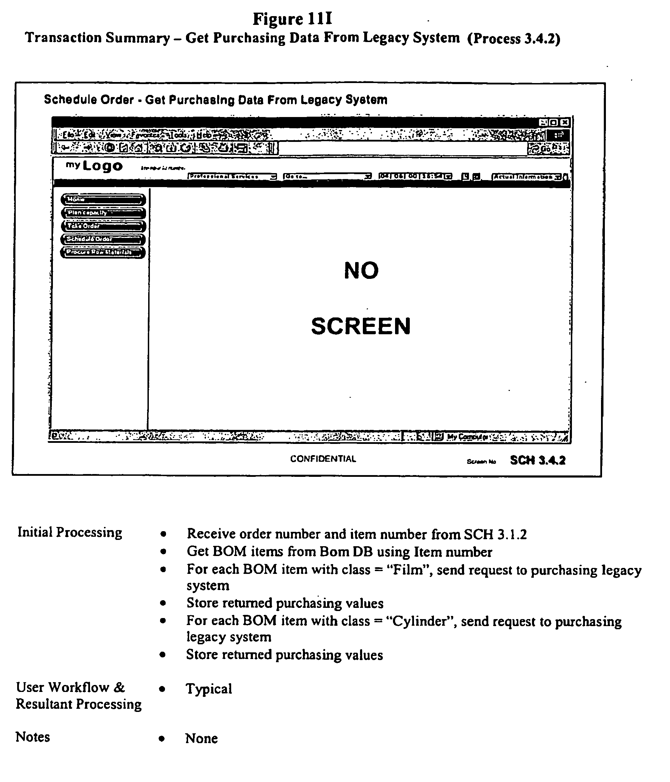

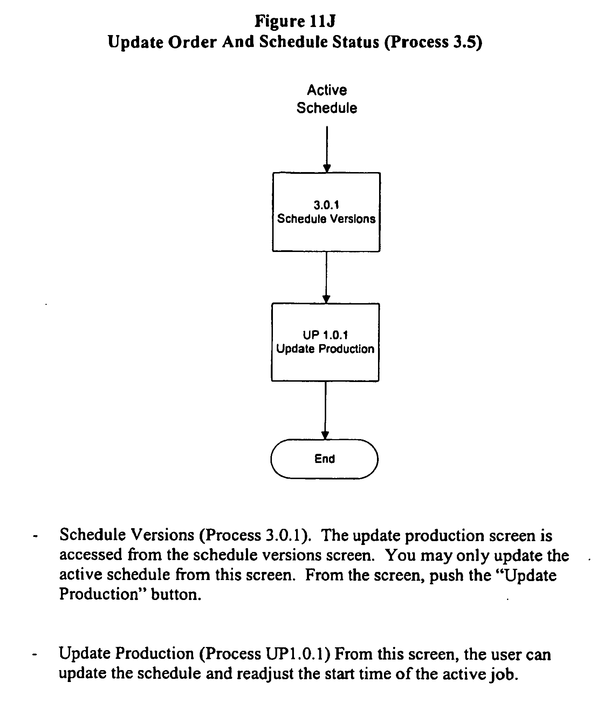

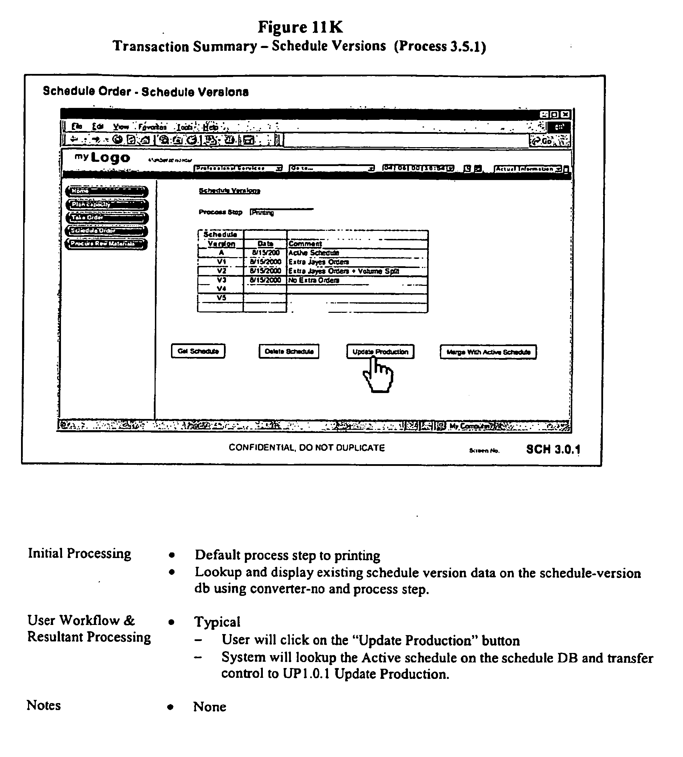

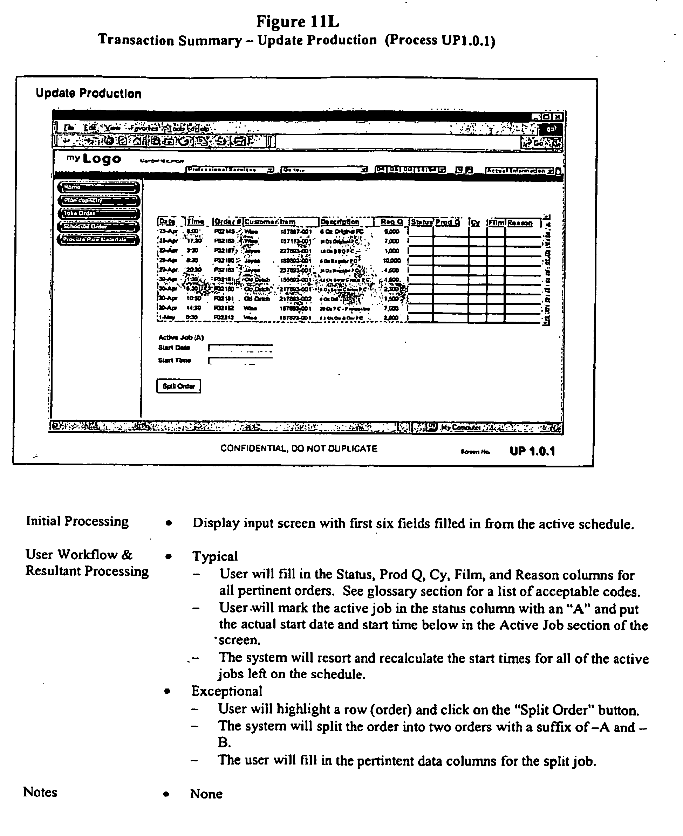

To fill an accepted order, its production must be scheduled. The purpose of the scheduling process is to sequence orders in a way that optimizes the effectiveness of manufacturing assets while still meeting customer delivery requirements. Figure 11 provides a detailed graphical overview of the scheduling process in accordance with the present invention.

Scheduling begins with a set of new or changed orders that have passed ATP/Allocation in the order management process. These orders have been accepted based on capacity and resource availability in a specific production bucket (day or week) to meet the promised date. The scheduling process defines the specific line and time an order will run, thus converting a capacity commitment into executable instructions for production.

When an order is scheduled (Process 3.1 for presses, Process 3.2 for laminators and Process 3.3 for slitters), inventory and purchasing data is retrieved from existing system(s) (Process 3.4). This data is used to project inventory levels and determine the availability of the packaging film and cylinders (plates) at the specific date and time an order is scheduled to run in manufacturing. This check of packaging film and cylinders (plates) improves schedule conformance by preventing raw material shortages. With this information in hand, the order is added to an existing schedule (at the beginning, at the end or in the middle of the schedule).

The scheduling process automatically recalculates the entire schedule whenever an order is added or removed from the schedule. This recalculation involves detailed changeover and line speed calculations to accurately quantify start and end times. This instantaneous recalculation is a powerful decision tool for schedulers. Presses, laminators and slitters are scheduled in a similar way, using different formulas for changeover and line speed calculations.

The completed schedule is sent to manufacturing for execution. A list of projected late or incomplete orders are sent to customer service so that appropriate action(s) can be taken. As the schedule is run, manufacturing updates are added to the system of the present invention (Process 3.5) to support projections of order status and schedule conformance. This data is used to adjust the start time for the next period (manufacturing may be running ahead or behind schedule).

Figures 11A - 11L provide detailed descriptions of the scheduling process steps represented in Figure 11 according to an embodiment of the present invention. Included in these Figures are transaction summaries of the steps for a converter's creation of a package item, including exemplary monitor views of this functionality accompanied by computer programming specifications for achieving this functionality.

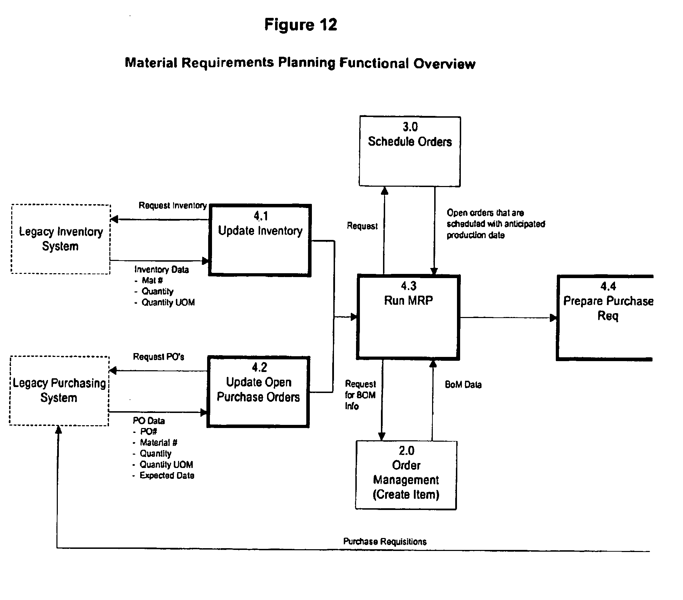

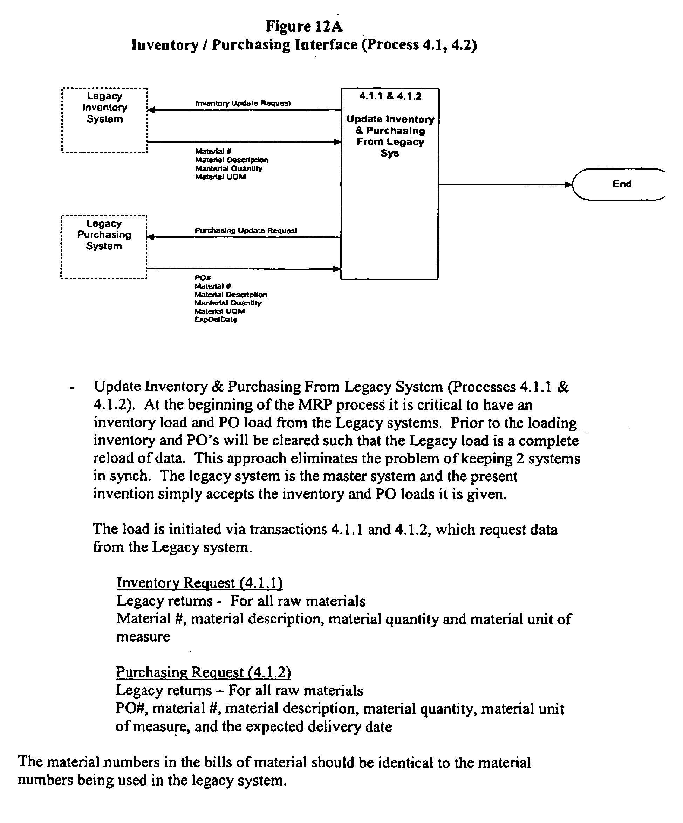

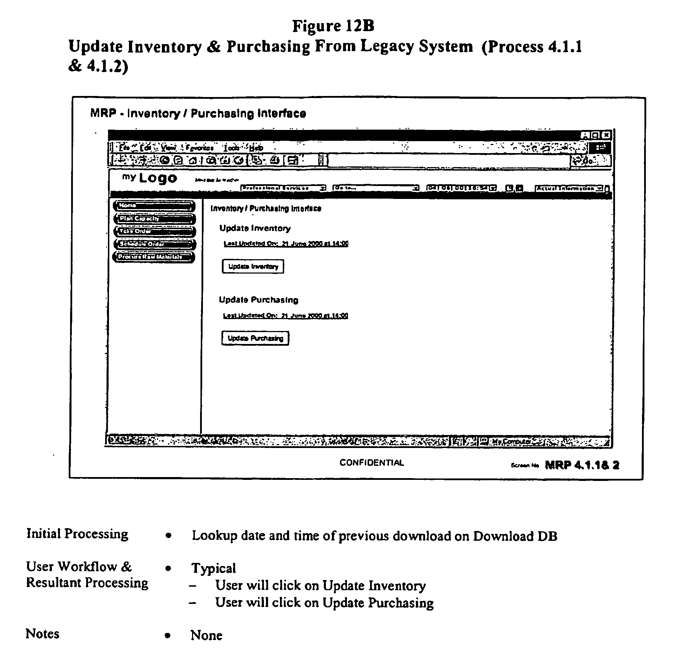

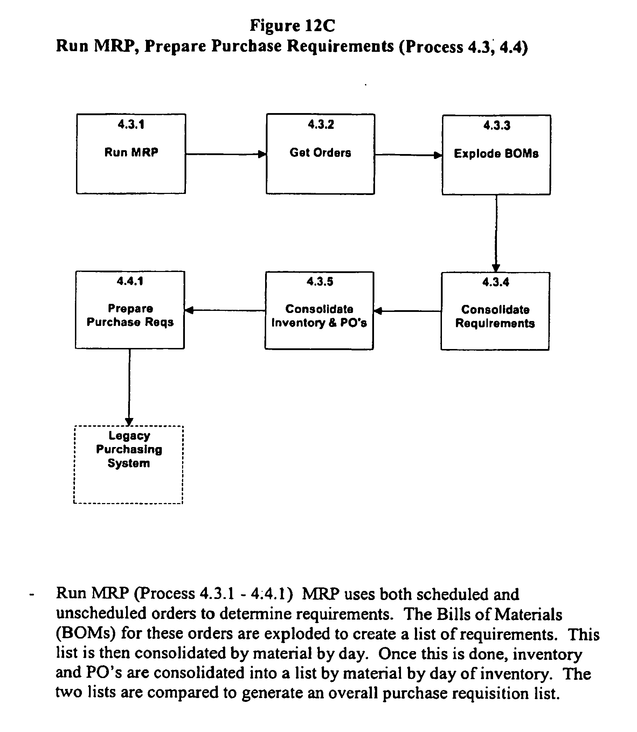

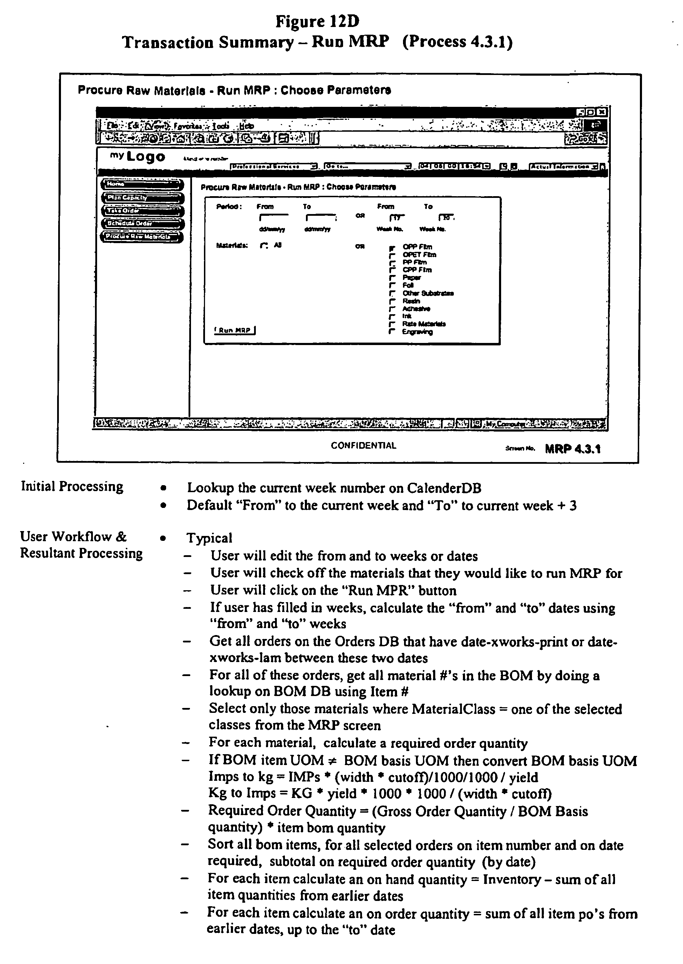

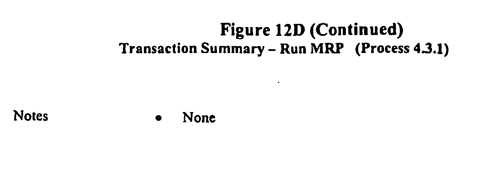

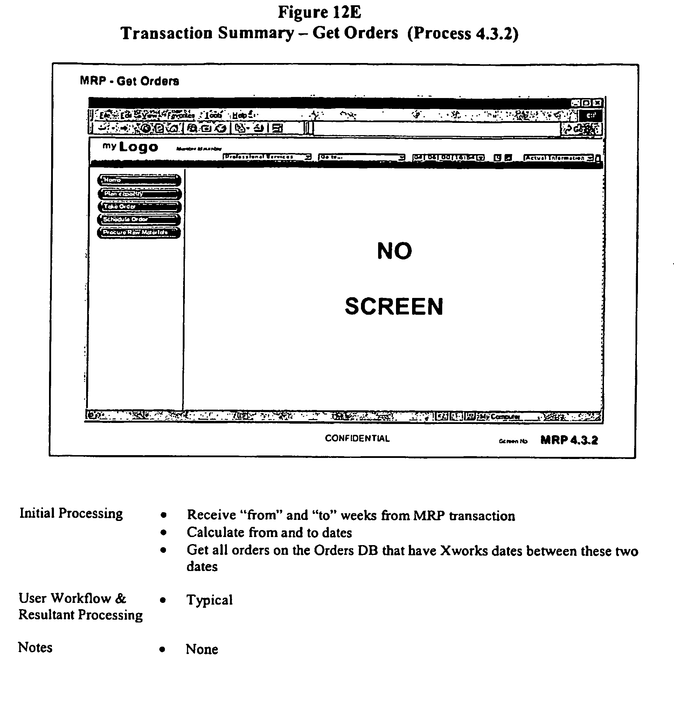

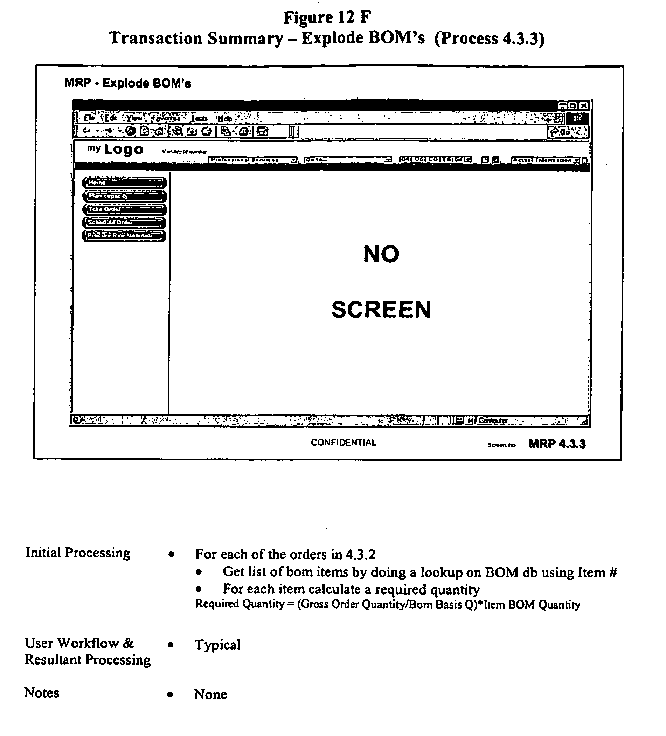

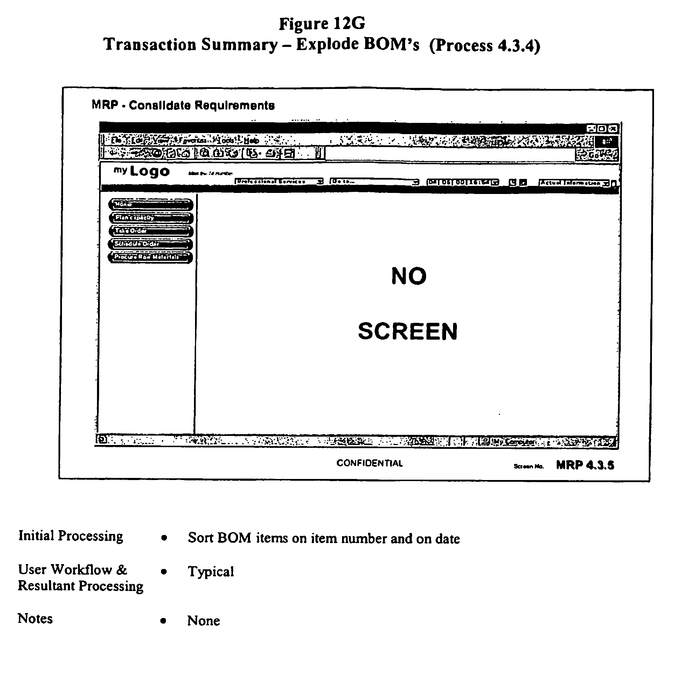

In order to produce packaging items and to schedule their production, it is necessary to make sure that materials necessary for the production of the packaging items are available when needed. This process is referred to as materials requirements planning. Figure 12 provides a detailed graphical overview of the Material Requirements Planning Process ("MRP") in accordance with an embodiment of the present invention. The purpose of material requirements planning is to generate a requirements list so that raw materials can be ordered and ready in time for manufacturing. The material requirements planning process begins with loading inventory and purchase order data into the system of the present invention (Processes 4.1 and 4.2). This inventory and purchase order data is used to calculate stock levels of raw materials on a day-by-day basis. The comparison of this data to manufacturing requirements generates a net daily material requirement (Process 4.3). This net daily requirement is then "rolled up" into purchase requisitions which are transmitted back to the Legacy system to create purchase orders (Process 4.4).

Figures 12A - 12G provide detailed descriptions of the MRP steps represented in Figure 12 according to an embodiment of the present invention. Included in these figures are transaction summaries of the steps for a converter's creation of a package item, including exemplary monitor views of this functionality accompanied by computer programming specifications for achieving this functionality.

## Claims

1. A method for management of a packaging products, including labels, supply chain comprising the steps of:
(a) entering digital data representing a packaging design comprising a graphic design displayed on a package, and a packaging product design comprising a combination of the packaging design with the structure of the package, into a computer system,
(b) entering digital data representing an order for delivery of a specified quantity of a packaging item, incorporating the packaging design, on a specified date into the computer system;
(c) entering digital data representing production resources necessary to produce the packaging item ordered in the specified quantity into the computer system;
(d) entering digital data representing the availability of production resources necessary to produce the quantity of the packaging item ordered on the specified date into the computer system; and
(e) accessing the data entered in the preceding steps to determine the supply chain's ability to produce the packaging item ordered in the specified quantity on the specified date.

2. The method of claim 1, wherein the computer system is accessible by a network shared by members of the packaging supply chain.

3. The method of claim 2, wherein the network is the internet.

4. The method of claim 3, wherein the digital data representing a packaging product design is entered in the computer system using the internet.

5. The method of claim 4, wherein the digital data representing the order for the packaging item is entered into the computer system using the internet.

6. The method of claim 5, wherein the digital data representing the availability of production resources are entered in the computer system using the internet.

7. The method of claim 6, wherein the data representing the availability of production resources is stored and managed in time buckets.

8. The method of claim 7, wherein the production resources are production line availability, services, and material supplies.

9. The method of claim 1, wherein the digital data representing the packaging design are processed to create metadata comprised of data representing each color and the amount of ink necessary to print the packaging item and the degree of bounce associated with printing the packaging item.

10. The method of claim 9, wherein the metadata comprises data representing the degree of process difficulty associated with printing the packaging item, and the dimension of the packaging product design.

11. The method of claim 9 or 10, wherein the metadata is used to create the packaging product design.

12. The method of claim 10, wherein the packaging item is created by the steps of:
(a) an end user creating an item skeleton comprised of a packaging design and a packaging product design; and
(b) a converter adds detail to the item skeleton comprising a bill of materials, routings, and production item configuration.

13. The method of claim 12, wherein:
(a) metadata is used to define resource requirements necessary to produce a packaging item;
(b) an order for a specific packaging item is automatically slotted to a production resource based on the capability of the production resources to produce the item ordered; and
(c) requested order dates and quantities are electronically compared to projected production resources availability for purposes of order acceptance.

14. The method of claim 1, wherein a plurality of accepted orders are scheduled using decision support tools that provide immediate feedback on the impact of adding an order to a schedule, moving an order in a schedule, or deleting an order from a schedule.

15. The method of claim 14, wherein the means of adding, moving, or deleting an order is drag and drop functionality.

16. The method of claim 15, wherein the computer system maintains multiple alternative schedules for producing the plurality of accepted orders.

17. The method of claim 16, wherein schedules for successive steps in the manufacturing process are linked to one another, and immediate feedback on the impact of adding, moving, or deleting an order includes the impact that this change will have on subsequent steps in the production process.

18. The method of claim 17, comprising further the steps of:
(a) comparing projected production resource availability to actual production resource availability;
(b) comparing production schedules to actual production performance; and
(c) adjusting production availability or schedule assumptions to achieve consistency with actual performance.

19. The method of claim 1, wherein providers of material supplies have access to the requirements for material supplies necessary to produce the packaging item ordered.

20. A computer system for management of a packaging products, including labels, supply chain comprising:
(a) storage means programmed to store data comprised of:
(i) digital data representing a packaging design comprising a graphic design displayed on a package and a packaging product design comprising a combination of the packaging design with the structure of the package;
(ii) digital data representing an order for delivery of a specified quantity of a packaging item, incorporating the packaging product design, on a specified date;
(iii) digital data representing production resources necessary to produce the packaging item ordered in the specified quantity; and
(iv) digital data representing the availability of production resources necessary to produce the quantity of the packaging item ordered on the specified date; and
(b) means for accessing the data stored in the computer system to determine the supply chain's ability to produce the packaging products ordered.

21. The computer system of claim 20, wherein the computer system is capable of being accessed by a network shared by members of the packaging supply chain.

22. The computer system of claim 21, wherein the network is the internet.

23. The computer system of claim 22, wherein the computer system is capable of receiving the digital data representing a packaging product design from the internet.

24. The computer system of claim 23, wherein the computer system is capable of receiving the digital data representing the order for packaging products from the internet.

25. The computer system of claim 24, wherein the computer system is capable of receiving the digital data representing the availability of production resources from the internet.

26. The computer system of claim 25, wherein the computer system is programmed to store and manage the digital data representing the availability of production resources in time buckets.

27. The computer system of claim 26, wherein the production resources are production line availability, services, and material supplies.

28. The computer system of claim 24, wherein the computer system is programmed to process the digital data representing the packaging design to create metadata comprised of data representing each color and the amount of ink necessary to print the packaging item, the degree of bounce associated with printing the packaging item.

29. The computer system of claim 28, wherein the metadata comprises the degree of process difficulty associated with printing the packaging item and the dimensions of the packaging product design.

30. The computer system of claim 29, wherein the computer system is programmed to use the metadata to create the packaging product design.

31. The computer system of claim 30, wherein the computer is programmed to allow for creation of the package item by the steps of:
(a) storage of an item skeleton comprised of an packaging design and a packaging product design acquired from an end user; and
(b) adding detail to the item skeleton comprising a bill of materials, routings, and production item configuration.

32. The computer system of claim 31, wherein:
(a) the computer system is programmed to use metadata to define resource requirements necessary to produce a packaging item;
(b) the computer system is programmed to automatically slot an order for a specific packaging item to a production resource based on the capability of the production resource to produce the item ordered; and
(c) the computer system is programmed to compare requested order dates and quantities to projected production resources availability for purposes of order acceptance.

33. The computer system of claim 20, wherein the computer system is programmed to schedule a plurality of accepted orders using decision support tools that provide immediate feedback on the impact of adding an order to a schedule, moving an order in a schedule, or deleting an order from a schedule.

34. The computer system of claim 33, wherein the computer system is programmed to add, move, and delete an order by drag and drop functionality.

35. The computer system of claim 34, wherein the computer system is programmed to maintain multiple alternative schedules for producing the plurality of accepted orders.

36. The computer system of claim 35, wherein the computer is programmed to link schedules for successive steps in the manufacturing process to one another, and provide immediate feedback on the impact of adding, moving, or deleting an order, including the impact that this change will have on subsequent steps in the production process.

37. The computer system of claim 20, wherein the computer system is capable of providing access to data representing the requirements for material supplies necessary to produce the packaging items ordered to providers of material supplies.

## Patentansprüche

1. Verfahren zum Management einer Versorgungskette für Verpackungsprodukte, einschließlich von Kennzeichnungen, mit den Schritten:
(a) Eingeben von digitalen Daten, die ein Verpackungsdesign mit einem auf einer Verpackung dargestellten graphischen Design und eine Kombination aus dem Verpackungsdesign mit der Struktur der Verpackung umfassen, in ein Computer-System,
(b) Eingeben von digitalen Daten, die einen Auftrag zur Lieferung einer spezifizierten Menge eines Verpackungsobjektes, das das Verpackungsdesign hat, zu einem spezifischen Datum repräsentieren, in das Computer-System,
(c) Eingeben von digitalen Daten, die die zur Erzeugung des in Auftrag gegebenen Verpackungsobjektes in der spezifizierten Menge benötigten Produktionsressourcen darstellen, in das Computer-System,
(d) Eingeben von digitalen Daten, die die Verfügbarkeit der zur Herstellung der in Auftrag gegebenen Menge von Verpakkungsobjekten zu dem spezifizierten Datum benötigten Produktionsressourcen darstellen, in das Computer-System, und
(e) Zugreifen auf die in den vorhergehenden Schritten eingegebenen Daten., um die Fähigkeit der Versorgungskette zur Produktion des in Auftag gegebenen Verpackungsobjektes in der spezifizierten Menge zu dem spezifizierten Datum festzustellen.

2. Verfahren nach Anspruch 1, wobei das Computer-System durch ein Netzwerk zugänglich ist, das die Mitglieder der Verpackungsversorgüngskette gemeinsam nutzen.

3. Verfahren nach Anspruch 2, wobei das Netzwerk das Internet ist.

4. Verfahren nach Anspruch 3, wobei die digitalen Daten, die ein Verpackungsproduktdesign repräsentieren, unter Verwendung des Internet in das Computer-System eingegeben werden.

5. Verfahren nach Anspruch 4, wobei die digitalen Daten, die den Auftrag für das Verpackungsobjekt repräsentieren, in das Computer-System unter Verwendung des Internet eingegeben werden.

6. Verfahren nach Anspruch 5, wobei die digitalen Daten, die die Verfügbarkeit von Produktionsressourcen repräsentieren, in das Computer-System unter Verwendung des Internet eingegeben werden.

7. Verfahren nach Anspruch 6, wobei die Daten, die die Verfügbarkeit von Produktionsressourcen repräsentieren, in Zeitpaketen gespeichert und gehandhabt werden.

8. Verfahren nach Anspruch 7, wobei die Produktionsressourcen Produktionslinienverfügbarkeit, Serviceleistungen und Materialversorgung sind.

9. Verfahren nach Anspruch 1, wobei die digitalen Daten, die das Verpackungsdesign repräsentieren, verarbeitet werden, um Metadaten zu erzeugen, die Daten repräsentativ für jede Farbe und die benötigte Menge von Farbstoff zum Drucken des Verpackungsobjektes und das Ausmaß des Rückpralls, der mit dem Drucken des Verpackungsobjekts verbunden ist, umfassen.

10. Verfahren nach Anspruch 9, wobei die Metadaten Daten umfassen, die den Prozessschwierigkeitsgrad verbunden mit dem Drucken des Verpackungsobjektes und die Abmessungen des Verpackungsproduktdesigns repräsentieren.

11. Verfahren nach Anspruch 9 oder 10, wobei die Metadaten dazu verwendet werden, um das Verpackungsproduktdesign zu erzeugen.

12. Verfahren nach Anspruch 10, wobei das Verpackungsobjekt erzeugt wird, indem:
(a) Ein Endbenutzer einen Objektrahmen erzeugt, der ein Verpackungsdesign und ein Verpackungsproduktdesign umfasst, und
(b) ein Konvertierer zu dem Objektrahmen Details hinzufügt, die eine Stückliste, Arbeitswege und Produktionsobjektkonfiguration umfassen.

13. Verfahren nach Anspruch 12, wobei:
(a) Die Metadaten dazu verwendet werden, um Ressourcenanforderungen zu definieren, die zur Produktion eines Verpakkungsobjektes benötigt werden;
(b) ein Auftrag für ein spezifisches Verpackungsobjekt automatisch bei einer Produktionsressource auf Grundlage der Fähigkeiten der Produktionsressourcen, das in Auftrag gegebene Verpackungsobjekt zu produzieren, untergebracht wird, und
(c) angeforderte Auftragsdaten und -mengen elektronisch mit der projizierten Produktionsressourcenverfügbarkeit zum Zweck der Auftragsannahme verglichen werden.

14. Verfahren nach Anspruch 1, wobei eine Mehrzahl von akzeptierten Aufträgen unter Verwendung von Entscheidungsunterstützungswerkzeugen terminlich eingeplant werden, die eine unmittelbare Rückmeldung der Auswirkung der Hinzufügung eines Auftrags zu einem Terminplan, des Verschiebens eines Auftrags in einem Terminplan oder der Löschung eines Auftrags aus einem Terminplan liefern.

15. Verfahren nach Anspruch 14, wobei die Einrichtungen zum Hinzufügen, Verschieben oder Löschen eines Auftrags eine "Ziehen und Ablegen"-Funktionalität ("drag and drop") ist.

16. Verfahren nach Anspruch 15, wobei das Computer-Systems eine Mehrzahl von alternativen Terminenplänen zur Produktion der Mehrzahl von akzeptierten Aufträgen bereithält.

17. Verfahren nach Anspruch 16, wobei die Terminpläne für aufeinanderfolgende Schritte in dem Herstellungsprozess miteinander verbunden sind und eine unmittelbare Rückmeldung der Auswirkung des Hinzufügens, Verschiebens oder Löschens eines Auftrags die Auswirkung umfasst, die diese Änderung auf nachfolgende Schritte in dem Produktionsprozess hat.

18. Verfahren nach Anspruch 17, bei dem weiterhin:
(a) Die projizierte Produktionsressourcenverfügbarkeit mit der tatsächlichen Produktionsressourcenverfügbarkeit verglichen wird,
(b) Produktionsterminpläne mit tatsächlichen Produktionsleistungen verglichen werden, und
(c) Produktionsverfügbarkeit oder Terminplanannahmen eingestellt werden, um Einklang mit der tatsächlichen Leistung zu erzielen.

19. Verfahren nach Anspruch 1, wobei die Zulieferer von Materialvorräten Zugang zu den Anforderungen für Materiallieferungen haben, die zur Herstellung des in Auftrag gegebenen Verpackungsobjekts benötigt werden.

20. Computer-System zum Management einer Versorgungskette für Verpackungsprodukte, einschließlich Kennzeichnungen, mit:
(a) Speichereinrichtungen, die zum Speichern von Daten programmiert sind, welche umfassen:
(i) Digitale Daten, die ein Verpackungsdesign einschließlich eines graphischen Designs, das auf einer Verpackung dargestellt ist, und ein Verpackungsproduktdesign mit einer Kombination aus dem Verpackungsdesign mit der Struktur der Verpackung repräsentieren,
(ii) digitale Daten, die einen Auftrag zur Lieferung einer spezifizierten Menge eines Verpackungsobjektes, das das Verpackungsproduktdesign verwirklicht, zu einem spezifizierten Datum repräsentieren,
(iii) digitale Daten, die die zur Produktion des in Auftrag gegebenen Verpackungsobjektes in der spezifizierten Menge benötigten Produktionsressourcen repräsentieren, und
(iv) digitale Daten, die die Verfügbarkeit von Produktionsressourcen, die zur Produktion der Menge des bestellten Verpackungsobjektes zu dem spezifizierten Datum, benötigt werden, repräsentieren, und
(b) Einrichtungen zum Zugriff auf die in dem Computer-System gespeicherten Daten, um die Fähigkeit der Versorgungskette zur Erzeugung der bestellten Verpackungsprodukte festzustellen.

21. Computer-System nach Anspruch 20, wobei das Computer-System dazu in der Lage ist, durch die Mitglieder der Verpackungsversorgungskette über ein Netzwerk in Zugriff genommen zu werden.

22. Computer-System nach Anspruch 21, wobei das Netzwerk das Internet ist.

23. Computer-System nach Anspruch 22, wobei das Computer-System dazu in der Lage ist, digitale Daten, die ein Verpackungsproduktdesign repräsentieren, aus dem Internet zu empfangen.

24. Computer-System nach Anspruch 23, wobei das Computer-System dazu in der Lage ist, digitale Daten, die den Auftrag für Verpackungsprodukte repräsentieren, aus dem Internet zu empfangen.

25. Computer-System nach Anspruch 24, wobei das Compuer-System dazu in der Lage ist, digitale Daten, die die Verfügbarkeit von Produktionsressourcen repräsentieren, aus dem Internet zu empfangen.

26. Computer-System nach Anspruch 25, wobei das Computer-System dazu programmiert ist, digitale Daten, die die Verfügbarkeit von Produktionsressourcen repräsentierten, in Zeitpaketen zu speichern und zu handhaben.

27. Computer-System nach Anspruch 26, wobei die Produktionsressourcen Produktionslinienverfügbarkeit, Serviceleistungen und Materialzulieferungen sind.

28. Computer-System nach Anspruch 24, wobei das Computer-System dazu programmiert ist, die digitale Daten, die das Verpackungsdesign repräsentieren, zu verarbeiten, um Metadaten zu erzeugen, die Daten umfassen, die jede Farbe und die Menge von Farbstoff zum Drucken des Verpackungsobjektes und den Grad von mit dem Drucken des Verpackungsobjektes verbundenem Rückprall repräsentieren.

29. Computer-System nach Anspruch 28, wobei die Metadaten den Prozessschwierigkeitsgrad verbunden mit dem Druck des Verpackungsobjektes und die Abmessungen des Verpackungsproduktdesigns umfassen.

30. Computer-System nach Anspruch 29, wobei das Computer-System dazu programmiert ist, die Metadaten zu verwenden, um das Verpackungsproduktdesign zu erzeugen.

31. Computer-System nach Anspruch 30, wobei der Computer dazu programmiert ist, um die Erzeugung des Verpackungsobjektes durch die folgenden Schritte zu erlauben:
(a) Speichern eines Objektrahmens umfassend ein Verpackungsdesign und ein Verpackungsproduktdesign, die von einem Endbenutzer erhalten werden, und
(b) Hinzufügen von Details zu dem Objektrahmen, einschließlich Stücklisten, Arbeitswegen und Produktionsobjektkonfiguration.

32. Comuter-System nach Anspruch 31, wobei
(a) das Computer-System dazu programmiert ist, die Metadaten zu verwenden, um für die Produktion eines Verpackungsobjektes notwendig Ressourcenanforderungen zu definieren,
(b) das Computer-System dazu programmiert ist, um einen Auftrag für ein spezifisches Verpackungsobjekt einer Produktionsressource auf Grundlage der Fähigkeit der Produktionsressource, das bestellte Objekt zu produzieren, zuzuordnen, und
(c) das Computer-System dazu programmiert ist, um die angeforderten Auftragsdaten und -mengen zum Zweck der Auftragsannahme mit der projizierten Produktionsressourcenverfügbarkeit zu vergleichen.

33. Computer-System nach Anspruch 20, wobei das Computer-System dazu programmiert ist, eine Mehrzahl von akzeptierten Aufträgen unter Verwendung von Entscheidungsunterstützungswerkzeugen terminlich zu planen, die eine unmittelbare Rückmeldung der Auswirkung der Hinzufügung eines Auftrags in einen Terminplan, der Verschiebung eines Auftrages in einem Terminplan oder der Löschung eines Auftrags aus dem Terminplan liefern.

34. Computer-System nach Anspruch 33, wobei das Computer-System dazu programmiert ist, einen Auftrag durch eine "Ziehen und Ablegen"-Funktionalität ("drag and drop") hinzuzufügen, zu verschieben und zu löschen.

35. Computer-System nach Anspruch 34, wobei das Computer-System dazu programmiert ist, mehrere alternative Terminpläne zur Produktion der Mehrzahl von akzeptierten Aufträgen bereitzuhalten.

36. Computer-System nach Anspruch 35, wobei der Computer dazu prgrammiert ist, Terminpläne für aufeinanderfolgende Schritte in dem Herstellungsprozess miteinander zu verbinden und eine unmittelbare Rückmeldung der Auswirkung der Hinzufügung, der Verschiebung oder der Löschung eines Auftrags zu liefern, einschließlich der Auswirkung, die diese Änderung auf die nachfolgenden Schritte in dem Produktionsprozess haben wird.

37. Computer-System nach Anspruch 20, wobei das Computer-System dazu in der Lage ist, Lieferanten von Materialzulieferungen Zugang zu Daten bereitzustellen, die die Anforderungen von Materiallieferungen, die zur Produktion des bestellen Verpackungsobjektes benötigt werden, repräsentieren.

## Revendications

1. Procédé de gestion d'une chaîne logistique de produits d'emballage, notamment des étiquettes, comprenant les étapes d' :
(a) entrée de données numériques représentant un modèle d'emballage comprenant un modèle graphique affiché sur un emballage, et un modèle de produit d'emballage comprenant une combinaison du modèle d'emballage avec la structure de l'emballage, dans un système informatique,
(b) entrée de données numériques représentant une commande pour la livraison d'une quantité spécifiée d'un article d'emballage, incorporant le modèle d'emballage, à une date spécifiée dans le système informatique ;
(c) entrée de données numériques représentant des ressources de production nécessaires pour produire l'article d'emballage commandé dans la quantité spécifiée dans le système informatique ;
(d) entrée de données numériques représentant la disponibilité des ressources de production nécessaires pour produire la quantité de l'article d'emballage commandé à la date spécifiée dans le système informatique ; et
(e) accès aux données entrées dans les étapes précédentes pour déterminer la capacité de la chaîne logistique pour produire l'article d'emballage commandé dans la quantité spécifiée à la date spécifiée.

2. Procédé selon la revendication 1, dans lequel le système informatique est accessible par un réseau partagé par des éléments de la chaîne logistique d'emballage.

3. Procédé selon la revendication 2, dans lequel le réseau est l'Internet.

4. Procédé selon la revendication 3, dans lequel les données numériques représentant un modèle de produit d'emballage sont entrées dans le système informatique à l'aide de l'Internet.

5. Procédé selon la revendication 4, dans lequel les données numériques représentant la commande pour l'article d'emballage sont entrées dans le système informatique à l'aide de l'Internet.

6. Procédé selon la revendication 5, dans lequel les données numériques représentant la disponibilité des ressources de production sont entrées dans le système informatique à l'aide de l'Internet.

7. Procédé selon la revendication 6, dans lequel les données représentant la disponibilité des ressources de production sont stockées et gérées dans des intervalles de planification.

8. Procédé selon la revendication 7, dans lequel les ressources de production sont la disponibilité de la chaîne de production, les services et les fournitures de matériaux.

9. Procédé selon la revendication 1, dans lequel les données numériques représentant le modèle d'emballage sont traitées pour créer des métadonnées composées de données représentant chaque couleur et la quantité d'encre nécessaire pour imprimer l'article d'emballage et le degré de rebond associé à l'impression de l'article d'emballage.

10. Procédé selon la revendication 9, dans lequel les métadonnées comprennent des données représentant le degré de difficulté de processus associé à l'impression de l'article d'emballage, et la dimension du modèle de produit d'emballage.

11. Procédé selon la revendication 9 ou 10, dans lequel les métadonnées sont utilisées pour créer le modèle de produit d'emballage.

12. Procédé selon la revendication 10, dans lequel l'article d'emballage est créé par les étapes d' :
(a) un utilisateur final créant un squelette d'article composé d'un modèle d'emballage et d'un modèle de produit d'emballage ; et
(b) un convertisseur ajoutant un détail au squelette d'article comprenant une liste de matériaux, des routages et une configuration d'article de production.

13. Procédé selon la revendication 12, dans lequel :
(a) des métadonnées sont utilisées pour définir des besoins de ressources nécessaires pour produire un article d'emballage ;
(b) une commande pour un article d'emballage spécifique est automatiquement attribuée à une ressource de production sur la base de la capacité des ressources de production à produire l'article commandé ; et
(c) des dates et des quantités de commande demandées sont comparées électroniquement à la disponibilité prévue des ressources de production à des fins de réception de commande.

14. Procédé selon la revendication 1, dans lequel une pluralité de commandes acceptées est programmée à l'aide d'outils d'aide à la décision qui fournissent un retour immédiat sur l'impact de l'ajout d'une commande à un programme, du déplacement d'une commande dans un programme ou de la suppression d'une commande d'un programme.

15. Procédé selon la revendication 14, dans lequel les moyens d'ajout, de déplacement ou de suppression d'une commande sont une fonctionnalité de glisser-déposer.

16. Procédé selon la revendication 15, dans lequel le système informatique maintient des programmes alternatifs multiples pour produire la pluralité de commandes acceptées.

17. Procédé selon la revendication 16, dans lequel des programmes pour des étapes successives dans le processus de fabrication sont liés l'un à l'autre, et un retour immédiat sur l'impact de l'ajout, du déplacement ou de la suppression d'une commande comprend l'impact que ce changement aura sur des étapes ultérieures dans le processus de production.

18. Procédé selon la revendication 17, comprenant en outre les étapes de :
(a) comparaison de la disponibilité prévue des ressources de production à la disponibilité réelle des ressources de production ;
(b) comparaison des programmes de production à des performances de production réelles; et
(c) réglage des hypothèses de programme ou de disponibilité de production pour obtenir la cohérence avec des performances réelles.

19. Procédé selon la revendication 1, dans lequel des fournisseurs de fournitures de matériaux ont accès aux besoins pour des fournitures de matériaux nécessaires destinées à produire l'article d'emballage commandé.

20. Système informatique pour la gestion d'une chaîne logistique de produits d'emballage, notamment des étiquettes, comprenant :
(a) des moyens de stockage programmés pour stocker des données composées de :
(i) données numériques représentant un modèle d'emballage comprenant un modèle graphique affiché sur un emballage et un modèle de produit d'emballage comprenant une combinaison du modèle d'emballage avec la structure de l'emballage ;
(ii) données numériques représentant une commande pour la livraison d'une quantité spécifiée d'un article d'emballage, incorporant le modèle de produit d'emballage, à une date spécifiée ;
(iii) données numériques représentant des ressources de production nécessaires pour produire l'article d'emballage commandé dans la quantité spécifiée ; et
(iv) données numériques représentant la disponibilité des ressources de production nécessaires pour produire la quantité de l'article d'emballage commandé à la date spécifiée ; et
(b) des moyens d'accès aux données stockées dans le système informatique pour déterminer la capacité de la chaîne logistique destinée à produire les produits d'emballage commandés.

21. Système informatique selon la revendication 20, dans lequel le système informatique est susceptible d'être accédé par un réseau partagé par des éléments de la chaîne logistique d'emballage dans la quantité spécifiée à la date spécifiée.

22. Système informatique selon la revendication 21, dans lequel le réseau est l'Internet.

23. Système informatique selon la revendication 22, dans lequel le système informatique est susceptible de recevoir les données numériques représentant un modèle de produit d'emballage de l'Internet.

24. Système informatique selon la revendication 23, dans lequel le système informatique est susceptible de recevoir les données numériques représentant la commande pour des produits d'emballage de l'Internet.

25. Système informatique selon la revendication 24, dans lequel le système informatique est susceptible de recevoir les données numériques représentant la disponibilité des ressources de production de l'Internet.

26. Système informatique selon la revendication 25, dans lequel le système informatique est programmé pour stocker et gérer les données numériques représentant la disponibilité des ressources de production dans des intervalles de planification.

27. Système informatique selon la revendication 26, dans lequel les ressources de production sont la disponibilité de la chaîne de production, les services et les fournitures de matériaux.

28. Système informatique selon la revendication 24, dans lequel le système informatique est programmé pour traiter les données numériques représentant le modèle d'emballage pour créer des métadonnées composées de données représentant chaque couleur et la quantité d'encre nécessaire pour imprimer l'article d'emballage, le degré de rebond associé à l'impression de l'article d'emballage.

29. Système informatique selon la revendication 28, dans lequel les métadonnées comprennent le degré de difficulté de processus associé à l'impression de l'article d'emballage et les dimensions du modèle de produit d'emballage.

30. Système informatique selon la revendication 29, dans lequel le système informatique est programmé pour utiliser les métadonnées afin de créer le modèle de produit d'emballage.

31. Système informatique selon la revendication 30, dans lequel l'ordinateur est programmé pour permettre la création de l'article d'emballage par les étapes de :
(a) stockage d'un squelette d'article composé d'un modèle d'emballage et d'un modèle de produit d'emballage acquis à partir d'un utilisateur final ; et
(b) ajout d'un détail au squelette d'article comprenant une liste de matériaux, des routages et une configuration d'articles de production.

32. Système informatique selon la revendication 31, dans lequel :
(a) le système informatique est programmé pour utiliser des métadonnées afin de définir des besoins de ressources nécessaires pour produire un article d'emballage ;
(b) le système informatique est programmé pour attribuer automatiquement une commande pour un article d'emballage spécifique à une ressource de production sur la base de la capacité de la ressource de production pour produire l'article commandé ; et
(c) le système informatique est programmé pour comparer des dates et des quantités de commande demandées à la disponibilité prévue des ressources de production à des fins de réception de commande.

33. Système informatique selon la revendication 20, dans lequel le système informatique est programmé pour programmer une pluralité de commandes acceptées à l'aide d'outils d'aide à la décision qui fournissent un retour immédiat sur l'impact de l'ajout d'une commande à un programme, du déplacement d'une commande dans un programme ou de la suppression d'une commande d'un programme.

34. Système informatique selon la revendication 33, dans lequel le système informatique est programmé pour ajouter, déplacer et supprimer une commande par une fonctionnalité de glisser-déposer.

35. Système informatique selon la revendication 34, dans lequel le système informatique est programmé pour maintenir des programmes alternatifs multiples destinés à produire la pluralité de commandes acceptées.

36. Système informatique selon la revendication 35, dans lequel l'ordinateur est programmé pour lier des programmes pour des étapes successives dans le processus de fabrication l'un à l'autre, et fournir un retour immédiat sur l'impact de l'ajout, du déplacement ou de la suppression d'une commande, comprenant l'impact que ce changement aura sur des étapes ultérieures dans le processus de production.

37. Système informatique selon la revendication 20, dans lequel le système informatique est susceptible de fournir l'accès à des données représentant les besoins pour des fournitures de matériaux nécessaires pour produire les articles d'emballage commandé à des fournisseurs de fournitures de matériaux.
